(19) Europäisches Patentamt
European Patent Office
Office européen des brevets

(11) **EP 4 600 783 A1**

(12) **EUROPEAN PATENT APPLICATION**
published in accordance with Art. 153(4) EPC

(43) Date of publication:
**13.08.2025   Bulletin 2025/33**

(21) Application number: **23935096.0**

(22) Date of filing: **04.12.2023**

(51) International Patent Classification (IPC):
***G06F 3/01*** (2006.01)

(52) Cooperative Patent Classification (CPC):
**G06F 3/01; G06F 3/14; G06F 9/451; G06V 10/143;**
**G06V 40/16**

(86) International application number:
**PCT/CN2023/136224**

(87) International publication number:
**WO 2024/221929 (31.10.2024 Gazette 2024/44)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:   **27.04.2023   CN 202310481419**

(71) Applicant: **Honor Device Co., Ltd.**
**Shenzhen, Guangdong 518040 (CN)**

(72) Inventor: **ZHANG, Cheng**
**Shenzhen, Guangdong 518040 (CN)**

(74) Representative: **Epping - Hermann - Fischer**
**Patentanwaltsgesellschaft mbH**
**Schloßschmidstraße 5**
**80639 München (DE)**

(54) **DISPLAY METHOD AND ELECTRONIC DEVICE**

(57)     Embodiments of this application are applicable to the field of data processing, and provide a display method and an electronic device. The electronic device includes a first camera, and the first camera is a time of flight TOF camera. A first brightness of an environment in which the electronic device is located at a first moment is first obtained, a first image is further obtained when the first brightness is less than a preset threshold, then a first display direction is determined based on the first image, and finally a first interface is displayed based on the first display direction. The first image is an image captured by the first camera at the first moment. Because the first camera is a TOF camera, clarity of the image captured by the first camera is not affected by ambient light intensity. In this way, a probability that the first display direction determined based on the first image having higher clarity coincides with a display direction expected by a user can be improved, so that a display direction of a display interface can better meet the expectation of the user.

FIG. 5

EP 4 600 783 A1

## Description

This application claims priority to Chinese Patent Application No. 202310481419.2, filed with the China National Intellectual Property Administration on April 27, 2023 and entitled "DISPLAY METHOD AND ELECTRONIC DEVICE", which is incorporated herein by reference in its entirety.

## TECHNICAL FIELD

This application relates to the field of data processing, and more specifically, to a display method and an electronic device.

## BACKGROUND

In a process of using an electronic device, as a pose of a user holding the electronic device changes, a display direction of a display interface on the electronic device changes accordingly. For example, the display direction of the display interface may include a landscape mode and a portrait mode.

Currently, an electronic device is usually provided with an accelerometer (usually referring to a three-axis accelerometer) and a camera. The electronic device may determine a pose of the electronic device by using the accelerometer, and may capture a human face image by using the camera. Then, the electronic device may determine a display direction of a display interface based on the pose of the electronic device and a direction indicated by the human face image. However, in some scenarios, for example, a scenario in which a user uses a mobile phone in a side-lying pose during the night, because ambient light is poor, a resolution of a captured human face image is low. The image cannot be used for determining a screen direction. In this case, a display direction that is determined by the electronic device based on a pose of the mobile phone that is determined by using an accelerometer is different from a display direction expected by the user. Therefore, a finally displayed display direction of a display interface on the electronic device is different from the display direction expected by the user.

In view of this, how to enable a display direction of a display interface on an electronic device to better meet an expectation of a user becomes a problem to be urgently resolved.

## SUMMARY

This application provides a display method, so that a display direction of a display interface on an electronic device better meets an expectation of a user.

According to a first aspect, a display method is provided. The method is applied to an electronic device, the electronic device includes a first camera, the first camera is a time of flight TOF camera, and the method includes: obtaining a first brightness of an environment in which the electronic device is located at a first moment; obtaining a first image if the first brightness is less than a preset threshold, where the first image is an image captured by the first camera at the first moment; determining a first display direction based on the first image; and displaying a first interface based on the first display direction.

A display method provided in embodiments of this application is applied to an electronic device. The electronic device includes a first camera, and the first camera is a time of flight TOF camera. A first brightness of an environment in which the electronic device is located at a first moment is first obtained, a first image is further obtained when the first brightness is less than a preset threshold, then a first display direction is determined based on the first image, and finally a first interface is displayed based on the first display direction. The first image is an image captured by the first camera at the first moment. Because the first camera is a TOF camera, clarity of the image captured by the first camera is not affected by ambient light intensity. In this way, a probability that the first display direction determined based on the first image having higher clarity coincides with a display direction expected by a user can be improved, so that a display direction of a display interface can better meet the expectation of the user.

With reference to the first aspect, in some embodiments of the first aspect, the electronic device further includes a first sensor, and the first sensor is configured to obtain pose data of the electronic device. The determining a first display direction based on the first image includes: if a second display direction is obtained based on the first image, the first display direction being the same as the second display direction; or if a second display direction is not obtained based on the first image, obtaining first data, where the first data is pose data of the electronic device collected by the first sensor at the first moment; and determining a third display direction based on the first data, where the first display direction is the same as the third display direction.

The display direction provided in embodiments of this application is applied to an electronic device. The electronic device includes a first sensor and a first camera, where the first sensor is configured to collect pose data of the electronic device, and the first camera is a time of flight TOF camera, obtains first data and a first brightness, obtains the first brightness of an environment in which the electronic device is located at a first moment, further obtains a first image when the first brightness is less than a preset threshold, and then determines whether a second display direction can be obtained based on the first image. If the second display direction can be obtained based on the first image, a display direction of the electronic device is set to the second display direction. If the second display direction cannot be obtained based on the first image, a third display direction is determined based on the first data, and the display direction of the electronic device is set to the third display direction. This is equivalent to that in the process of determining the display direction of the electronic device, a priority of the display direction obtained based on the first image is higher than that of the display direction obtained based on the first data. Because the first image can indicate a face direction, compared with the display direction obtained based on the pose data (the first data) of the electronic device, the display direction obtained based on the face direction of a user better meets an expectation of the user, so that a display direction finally displayed by the electronic device can better meet the expectation of the user.

With reference to the first aspect, in some embodiments of the first aspect, the first image includes an infrared (IR) image, and the method further includes: obtaining key points in the IR image, where the key points indicate positions of facial features of a human face in the IR image; determining a first angle corresponding to the IR image based on the key points, where the first angle is an included angle between the human face in the IR image and a preset direction; and determining the second display direction based on the first angle.

According to the display method provided in embodiments of this application, an electronic device may obtain the IR image captured by the TOF camera at the first moment, obtain the key points indicating the positions of facial features of the human face in the IR image, determine the first angle between the human face in the IR image and the preset direction based on the key points, and further determine the second display direction based on the first angle. Because the key points can indicate the positions of the facial features of the human face in the IR image, the first angle determined based on the key points can more accurately indicate the included angle between the human face and the preset direction, so that the second display direction determined based on the first angle better matches the display direction expected by the user, thereby improving user experience.

With reference to the first aspect, in some embodiments of the first aspect, the first image further includes a depth image, and the method further includes: determining, based on the depth image, whether the IR image is a human face image; and determining the second display direction based on the IR image if the IR image is a human face image. According to the display direction provided in embodiments of this application, before the second display direction is determined based on the IR image, whether the IR image is a human face image may be first determined based on the depth image captured at the same time with the IR image, that is, whether the IR image is obtained by photographing the photographed object, rather than being obtained by photographing a picture or a photo is determined. Then, when the IR image is obtained by photographing the photographed object, the second display direction is determined based on the IR image. This means that a case in which the second display direction is determined based on the picture or the photo is excluded before the second display direction is determined based on the IR image. The picture or the photo is not related to the pose of the user at the current moment. Therefore, a case in which the display direction of the display interface of the mobile phone is determined based on the picture or the photo is avoided, that is, a case in which the determined display direction is irrelevant to the pose of the user at the current moment is avoided, and the determined display direction can better meet an expectation of the user.

With reference to the first aspect, in some embodiments of the first aspect, after the second display direction is obtained based on the first image, the method further includes: obtaining a second image and second data, where the second image includes an image captured by the first camera at a second moment, the second moment is a moment after the first moment, and the second data is pose data collected by the first sensor at the second moment; determining a fifth display direction based on the second data if a fourth display direction is not obtained based on the second image; and displaying a second interface based on the fifth display direction.

A display method provided in embodiments of this application is applied to an electronic device. The electronic device includes a first sensor and a first camera, where the first sensor is configured to collect pose data of the electronic device, and the first camera is a time of flight TOF camera, obtains first data and a first brightness, obtains the first brightness of an environment in which the electronic device is located at a first moment, further obtains a first image when the first brightness is less than a preset threshold, and then determines whether a second display direction can be obtained based on the first image. If the second display direction can be obtained based on the first image, a display direction of the electronic device is set to a display direction indicated by the second display direction. In addition, after the second display direction can be obtained based on the first image, if a corresponding display direction cannot be obtained again based on an image captured by the TOF camera, whether a display direction determined based on pose data is the same as the first display direction is compared to determine a fifth display direction in which a second interface is displayed at a next moment. Usually, a display direction of the electronic device does not frequently change, and when the display direction determined at the first moment is the first display direction, there is a higher probability that the display direction of the electronic device is the same as the first display direction at the second moment. Therefore, when a human face is lost (that is, a fourth display direction cannot be obtained based on a second image) after the human face is available (that is, the second display direction can be obtained based on the first image), it is first determined that the display direction determined based on the second data is the same as the first display direction at the first moment, and then the display direction in which the second interface is displayed is set to be the same as the display direction in which the first interface is displayed at the first moment. This can reduce a probability that the display direction determined based on the pose data of the electronic device does not coincide with a display direction expected by a user, and improves user experience.

With reference to the first aspect, in some embodiments of the first aspect, the determining a fifth display direction based on the second data includes: if a sixth display direction is not obtained based on a correspondence between the second data and a display direction, the fifth display direction being the same as the first display direction.

In the display method provided in embodiments of this application, when the fourth display direction cannot be obtained based on the second image, whether the sixth display direction can be obtained based on the correspondence between the second data and the display direction is first determined, and if the sixth display direction cannot be obtained based on the correspondence between the second data and the display direction, the first display direction is used as the fifth display direction, so that when a display direction cannot be obtained based on both the image captured by the first camera and the pose data of the electronic device, the first display direction in which the first interface is displayed last time is used as the fifth display direction in which the second interface is currently displayed, to avoid a problem that the display direction of the second interface cannot be determined.

With reference to the first aspect, in some embodiments of the first aspect, the determining a fifth display direction based on the second data includes: if a sixth display direction is obtained based on a correspondence between the second data and a display direction, determining whether the sixth display direction is the same as the first display direction; and if the sixth display direction is the same as the first display direction, the fifth display direction being the same as the first display direction.

In the display method provided in embodiments of this application, when the fourth display direction cannot be obtained based on the second image, whether the sixth display direction can be obtained based on the correspondence between the second data and the display direction is first determined. If the sixth display direction can be obtained based on the correspondence between the second data and the display direction, whether the sixth display direction is the same as the first display direction is further determined; and when the sixth display direction is the same as the first display direction, the display direction in which the second interface is displayed, that is, the sixth display direction obtained based on the correspondence between the second data and the display direction is set to the first display direction. Usually, the display direction of the electronic device does not frequently change. When the display direction determined at the first moment is the first display direction, there is a higher probability that the display direction of the electronic device at the second moment is the same as the first display direction. Therefore, when the display direction can be determined based only on the second data, after it is first determined that the display direction determined based on the second data is the same as the first display direction at the first moment, the display direction in which the second interface is displayed is set to be the same as the display direction in which the first interface is displayed at the first moment, so that a probability that the display direction determined based on the pose data of the electronic device does not coincide with the display direction expected by the user can be reduced, and user experience is improved.

With reference to the first aspect, in some implementations of the first aspect, the method further includes: turning on the first camera if the sixth display direction is different from the first display direction; obtaining a third image by using the first camera, where the third image includes an image captured by the first camera at a third moment, and the third moment is a moment after the second moment; and determining a seventh display direction based on the third image.

According to the display method provided in embodiments of this application, when the fourth display direction cannot be obtained based on the second image, whether the sixth display direction can be obtained based on the correspondence between the second data and the display direction is first determined. If the sixth display direction can be obtained based on the correspondence between the second data and the display direction, whether the sixth display direction is the same as the first display direction is further determined; the TOF camera is turned on if the sixth display direction is different from the first display direction, the third image is obtained by using the TOF camera, then the seventh display direction is determined based on the third image, and finally the third interface is displayed based on the seventh display direction. In this way, even if the display direction of the second interface cannot be accurately determined based on the second image and/or the second data at the second moment, a display direction of the third interface can be determined at a next moment (that is, the third moment) based on the third image captured by the TOF camera. In other words, the display direction in which the third interface is displayed at the third moment is obtained based on the third image captured by the TOF camera, and better coincides with a display direction expected by the user, thereby improving user experience.

With reference to the first aspect, in some embodiments of the first aspect, the electronic device further includes a second camera, the second camera is configured to capture an ambient occlusion AO image, and the method further includes: obtaining a fourth image if the first brightness is greater than or equal to the preset threshold, where the fourth image is an image captured by the second camera at the first moment; determining the first display direction based on the fourth image; and displaying the first interface based on the first display direction.

A display method provided in embodiments of this application is applied to an electronic device. The electronic device includes a first sensor, a first camera, and a second camera. The first sensor is configured to collect pose data of the electronic device, the first camera is a time of flight TOF camera, and the second camera is an ambient occlusion camera configured to capture an AO image. The method includes: obtaining first data and a first brightness in response to a first operation, obtaining a first image when the first brightness is less than a preset threshold, and determining a first display direction based on the first data and/or the first image; obtaining a fourth image when the first brightness is greater than or equal to the preset threshold, and determining the first display direction based on the first data and/or the fourth image; and finally, displaying a first interface based on the first display direction. In other words, according to the display method provided in this application, when ambient light is weak, the first display direction can be determined based on the first image that is captured by the TOF camera and that is not affected by ambient light intensity. When ambient light is strong, the first display direction can be determined based on the AO image that is captured by the ambient occlusion camera and that has lower power consumption. Therefore, when the ambient light is weak, a probability that the first display direction determined based on the first image having higher clarity and/or the first data coincides with a display direction expected by a user can be improved. When the ambient light is strong, the first display direction is determined based on the AO image using low power consumption, to reduce power consumption of the electronic device.

With reference to the first aspect, in some embodiments of the first aspect, after the obtaining a first image, the method further includes: turning off the first camera.

According to the display method provided in embodiments of this application, because power consumption of the TOF camera is usually large, the TOF camera is turned off after the first image is captured, or the TOF camera is turned off after the second display direction is obtained based on the first image, to reduce power consumption brought by the TOF camera.

According to a second aspect, a display apparatus is provided, including a unit configured to perform any method in the first aspect. The apparatus may be a server, or may be a terminal device, or may be a chip in a terminal device. The apparatus includes an input unit and a processing unit.

When the apparatus is a terminal device, the processing unit may be a processor, and the input unit may be a communication interface. The terminal device may further include a memory. The memory is configured to store computer program code. When the processor executes the computer program code stored in the memory, the terminal device is enabled to perform any method in the first aspect.

When the apparatus is a chip in a terminal device, the processing unit may be a logic processing unit inside the chip, and the input unit may be an input interface, a pin, a circuit, or the like. The chip may further include a memory. The memory may be a memory (for example, a register or a buffer) in the chip, or may be a memory (for example, a read-only memory or a random access memory) located outside the chip. The memory is configured to store computer program code, and when the processor executes the computer program code stored in the memory, the chip is enabled to perform any method in the first aspect.

In a possible implementation, the memory is configured to store a computer program code. The processor executes the computer program code stored in the memory; and when computer program code stored in the memory is executed, the processor is configured to: obtain a first brightness of an environment in which the electronic device is located at a first moment; obtain a first image if the first brightness is less than a preset threshold, where the first image is an image captured by the first camera at the first moment; determine a first display direction according to the first image; and display the first interface based on the first display direction.

According to a third aspect, a computer-readable storage medium is provided. The computer-readable storage medium stores computer program code, and when the computer program code is run by a display apparatus, the display apparatus is enabled to perform any display method in the first aspect.

According to a fourth aspect, a computer program product is provided. The computer program product includes a computer program code. When the computer program code is run by a display apparatus, the display apparatus is enabled to perform any apparatus method in the first aspect.

A display method provided in embodiments of this application is applied to an electronic device. The electronic device includes a first camera, and the first camera is a time of flight TOF camera. A first brightness of an environment in which the electronic device is located at a first moment is first obtained, a first image is further obtained when the first brightness is less than a preset threshold, then a first display direction is determined based on the first image, and finally a first interface is displayed based on the first display direction. The first image is an image captured by the first camera at the first moment. Because the first camera is a TOF camera, clarity of the image captured by the first camera is not affected by ambient light intensity. In this way, a probability that the first display direction determined based on the first image having higher clarity coincides with a display direction expected by a user can be improved, so that a display direction of a display interface can better meet the expectation of the user.

**BRIEF DESCRIPTION OF DRAWINGS**

FIG. 1 is a diagram of a hardware system applicable to an electronic device of this application;
FIG. 2 is a diagram of a software system applicable to an electronic device of this application;
FIG. 3 is a diagram of different display direction on an electronic device;
FIG. 4 is a diagram of an application scenario according to an embodiment of this application;
FIG. 5 is a schematic flowchart of a display method according to an embodiment of this application;
FIG. 6 is a schematic flowchart of another display method according to an embodiment of this application;
FIG. 7 is a schematic flowchart of another display method according to an embodiment of this application;
FIG. 8 is a diagram of a first image according to an embodiment of this application;
FIG. 9 is a diagram of key points in an IR image according to an embodiment of this application;
FIG. 10 is a diagram of a first angle according to an embodiment of this application;
FIG. 11 is a diagram of different display directions according to an embodiment of this application;
FIG. 12 is a schematic flowchart of another display method according to an embodiment of this application;
FIG. 13 is a schematic flowchart of another display method according to an embodiment of this application;
FIG. 14 is a schematic flowchart of another display method according to an embodiment of this application;
FIG. 15 is a diagram of a display apparatus according to this application; and
FIG. 16 is a diagram of an electronic device for display according to this application.

**DESCRIPTION OF EMBODIMENTS**

The following describes the technical solutions of embodiments of this application with reference to the accompanying drawings in embodiments of this application. In the descriptions of embodiments of this application, "/" means "or" unless otherwise specified. For example, A/B may represent A or B. A term "and/or" in this specification describes only an association relationship between associated objects and indicates that three relationships may exist. For example, A and/or B may represent the following three cases: Only A exists, both A and B exist, and only B exists. In addition, in the descriptions of embodiments of this application, "a plurality of" represents two or more.

The terms "first", "second" and "third" described below are merely intended for a purpose of description, and shall not be understood as an indication or implication of relative importance or implicit indication of the quantity of indicated technical features. Therefore, a feature limited by "first", "second", or "third" may explicitly or implicitly include one or more of the features.

A display method provided in embodiments of this application may be applied to an electronic device. The electronic device includes a terminal device. The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in smart home (smart home), or the like. A specific technology and a specific device form used by the terminal device are not limited in embodiments of this application.

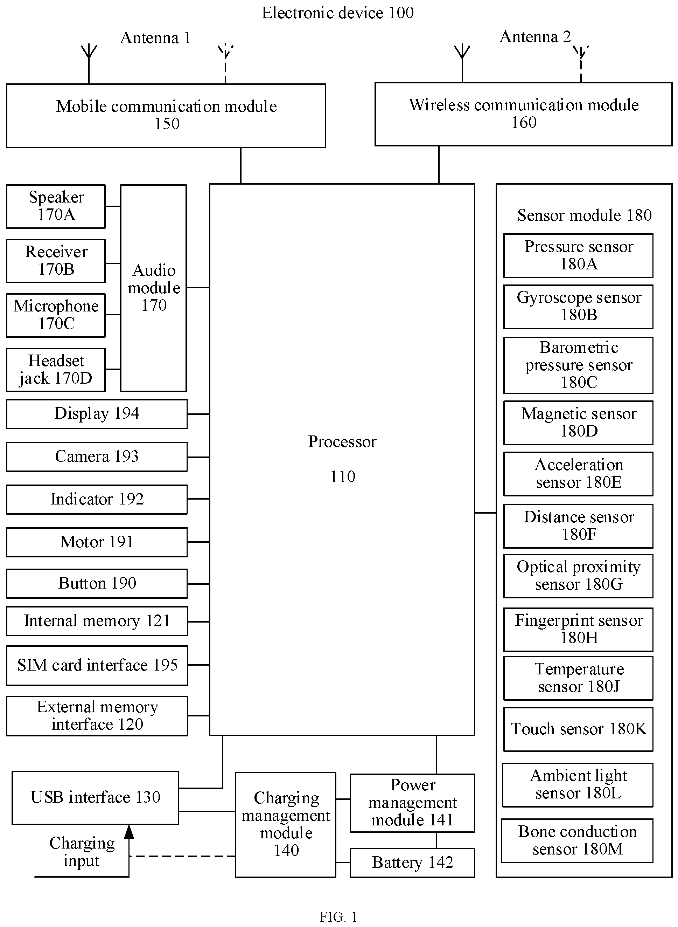

FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, some components may be combined, or some components may be split, or different component arrangements may be used. The components shown in the figure may be implemented by hardware, software or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors.

The controller may be a nerve center and a command center of the electronic device 100. The controller may generate an operation control signal based on an instruction operation code and a time sequence signal, to control instruction reading and instruction execution.

A memory may be further disposed in the processor 110, and is configured to store instructions and data. In some embodiments, the memory in processor 110 is a cache. The memory may store instructions or data that is recently used or cyclically used by the processor 110. If the processor 110 needs to use the instructions or data again, the processor 110 may directly invoke the instructions or data from the memory. This avoids repeated access, and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that a schematic interface connection relationship between the modules in embodiments of this application is merely an example for description, and constitutes no limitation on the structure of the electronic device 100. In some other embodiments of this application, the electronic device 100 may alternatively use an interface connection manner different from an interface connection manner in the foregoing embodiment, or use a combination of a plurality of interface connection manners.

The electronic device 100 implements a display function by using the GPU, the display 194, the application processor, and the like. The GPU is an image processing microprocessor and connects the display 194 to the application processor. The GPU is configured to perform mathematical and geometric calculations, and is configured for image rendering. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a Miniled, a MicroLed, a Micro-oLed, quantum dot light-emitting diodes (quantum dot light-emitting diodes, QLED), and the like. In some embodiments, the electronic device 100 may include 1 or N displays 194, where N is a positive integer greater than 1. The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through a lens, and is projected to a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal of a format like RGB or YUV. In some embodiments, the electronic device 100 may include one or N cameras 193, where N is a positive integer greater than 1. In a possible case, the electronic device 100 may include a camera configured to capture an ambient occlusion image and a time of flight (Time of Flight, TOF) camera. The TOF camera may be configured to capture a depth image and an infrared (Infrared Radiation, IR) image.

The digital signal processor is configured to process a digital signal, and may process another digital signal in addition to the digital image signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. Therefore, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, a transmission mode between neurons in a human brain, and may further continuously perform self-learning. Applications such as intelligent cognition of the electronic device 100 may be implemented through the NPU, for example, image recognition, facial recognition, speech recognition, and text understanding.

The gyroscope sensor 180B may be configured to determine a motion pose of the electronic device 100. In some embodiments, an angular velocity of the electronic device 100 around three axes (that is, x, y, and z axes) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyroscope sensor 180B may be further used in a navigation scenario and a motion-sensing game scenario.

The acceleration sensor 180E may detect magnitudes of accelerations of the electronic device 100 in various directions (usually on three axes). When the electronic device 100 is still, a magnitude and a direction of gravity may be detected. The acceleration sensor may be further configured to recognize a pose of the electronic device, and is used in applications such as switchover between a landscape mode and a portrait mode and a pedometer.

The distance sensor 180F is configured to measure a distance. The electronic device 100 may measure a distance in an infrared manner or a laser manner. In some embodiments, in a photographing scenario, the electronic device 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear for a call, to automatically perform screen-off for power saving. The optical proximity sensor 180G may further be used for automatically unlocking or locking a screen in leather case mode or pocket mode.

The ambient light sensor 180L is configured to sense brightness of ambient light. The electronic device 100 may adaptively adjust brightness of the display 194 based on the sensed ambient light brightness. The ambient light sensor 180L may further be configured to automatically adjust a white balance during photographing. The ambient light sensor 180L may further cooperate with the optical proximity sensor 180G to detect whether the electronic device 100 is in a pocket, to avoid an accidental touch.

The touch sensor 180K is also referred to as a "touch panel". The touch sensor 180K may be disposed on the display 194, and the touch sensor 180K and the display 194 form a touchscreen. The touchscreen is also referred to as a "touch screen". The touch sensor 180K is configured to detect a touch operation performed on or near the touch sensor 180K. The touch sensor may transfer the detected touch operation to the application processor, to determine a type of a touch event. A visual output related to the touch operation may be provided through the display 194. In some other embodiments, the touch sensor 180K may alternatively be disposed on a surface of the electronic device 100 at a position different from that of the display 194.

It should be noted that, any electronic device mentioned in embodiments of this application may include more or fewer modules in the electronic device 100.

A software system of the electronic device 100 may use a layered architecture, an event-driven architecture, a micro kernel architecture, a micro service architecture, or a cloud architecture. In an embodiment of this application, an Android system with a layered architecture is used as an example to describe a software structure of the electronic device 100.

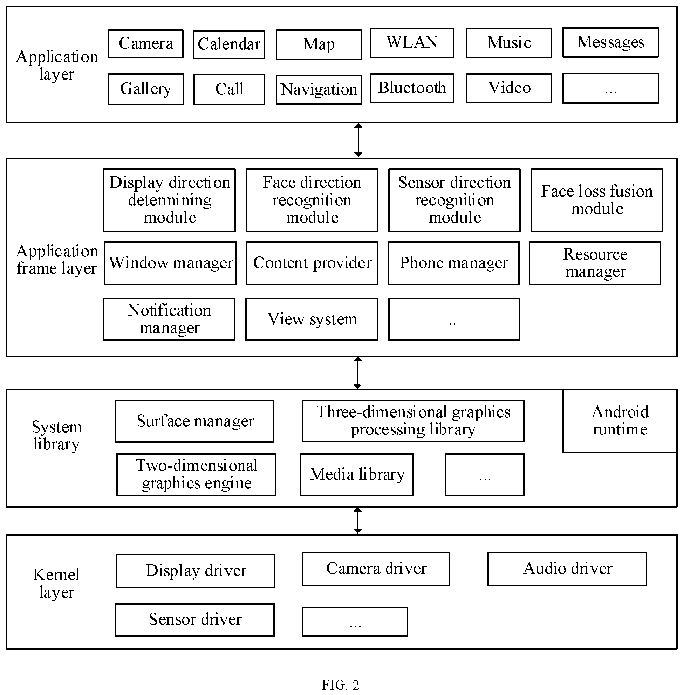

FIG. 2 is a block diagram of the software structure of the electronic device 100 according to an embodiment of this application.

In a layered architecture of the electronic device 100, software is divided into several layers, and each layer has a clear role and task. Communication between layers is performed through software interfaces. In some embodiments, the Android system is divided into four layers, namely, an application layer, an application framework layer, an Android runtime (Android runtime) and a system library, and a kernel layer from top to bottom.

The application layer may include a series of application packages.

As shown in FIG. 2, the application packages may include applications such as Camera, Gallery, Calendar, Call, Map, Navigation, WLAN, Bluetooth, Music, Video, and Messages.

The application framework layer provides an application programming interface (application programming interface, API) and a programming framework for the applications at the application layer. The application framework layer includes some predefined functions.

As shown in FIG. 2, the application framework layer may include a window manager, a content provider, a view system, a phone manager, a resource manager, a notification manager, a display direction determining module, a face direction recognition module, a sensor direction recognition module, a face loss fusion module, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and received, a browsing history and a browsing bookmark, a phone book, and the like.

The view system includes visual controls such as a control for displaying a text and a control for displaying an image. The view system may be configured to construct an application. A display interface may include one or more views. For example, a display interface including an SMS message notification icon may include a text display view and a picture display view.

The phone manager is configured to provide a communication function of the electronic device 100, for example, management of a call status (including answering, declining, or the like).

The resource manager provides various resources for an application, such as a localized character string, an icon, a picture, a layout file, and a video file.

The notification manager enables an application to display notification information in a status bar, and may be configured to convey a notification type message. The message may automatically disappear after a short pause without a user interaction. For example, the notification manager is configured to provide a notification of download completion, a message notification, and the like. The notification manager may further display a notification in a form of a graph or a scroll bar text in a top status bar of the system, for example, a notification of an application running in the background, or may display a notification in a form of a dialog window on a screen. For example, text information is prompted in the status bar, an alert tone is made, the electronic device vibrates, or an indicator light blinks.

The display direction determining module is configured to determine a final display direction of an application based on a display direction determined by a sensor and/or a camera. It should be understood that the display direction determined by the display direction determining module is a display direction used by the electronic device when the electronic device actually displays an interface.

The face direction recognition module is configured to determine a face direction based on an image captured by the TOF camera, and then determine a candidate display direction based on the face direction. It should be understood that the candidate display direction determined by the face direction recognition module may not be a display direction used by the electronic device when the electronic device actually displays an interface, and the display direction used by the electronic device when the electronic device actually displays the interface is finally determined by the foregoing display direction determining module based on a priority order of candidate display directions determined by the face direction recognition module.

The sensor direction recognition module is configured to determine a candidate display direction based on pose data of the electronic device collected by the acceleration sensor. It should be understood that the candidate display direction determined by the sensor direction recognition module may not be a display direction used by the electronic device when the electronic device actually displays an interface, and the display direction used by the electronic device when the electronic device actually displays the interface is finally determined by the foregoing display direction determining module based on a priority order of candidate display directions determined by the sensor direction recognition module.

The face loss fusion module is configured to determine, when the face direction recognition module cannot determine a candidate display direction at a moment after the face direction recognition module determines a candidate display direction, a candidate display direction based on a candidate display direction determined by the sensor direction recognition module and a display direction used by the electronic device last time when the electronic device actually displays an interface.

The Android runtime includes a kernel library and a virtual machine. The Android runtime is responsible for scheduling and managing an Android system.

The kernel library includes two parts: a function that needs to be invoked in Java language and a kernel library of Android.

The application layer and the application framework layer run in the virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG-4, H.264, MP3, AAC, AMR, JPG, PNG, and the like.

The three-dimensional graphics processing library is configured to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a camera driver, an audio driver, and a sensor driver, a Wi-Fi driver, and the like.

It should be noted that, any electronic device mentioned in embodiments of this application may include more or fewer modules in the electronic device. For example, the electronic device may further include a memory, a timer, and the like.

For ease of understanding, some concepts related to embodiments of this application are exemplified for reference.

1. Depth image

A depth image is an image in which a distance from an image capturer (usually referring to a TOF camera) to a point in an image scenario is used as a pixel value.

2. Ambient occlusion (Ambient Occlusion, AO) image

An AO image usually refers to an image obtained by simulating global illumination in a particular calculation manner. Usually, a display problem caused by insufficient light in an image can be alleviated by using the AO image. The AO image is usually obtained by processing an image captured by the camera, and power consumption for obtaining the AO image is low. Because image quality of the AO image is high, and the power consumption for obtaining the AO image is low, the electronic device can obtain AO images continuously, so that the AO image is usually used for determining a display direction of the electronic device.

3. Infrared (Infrared Radiation, IR) image

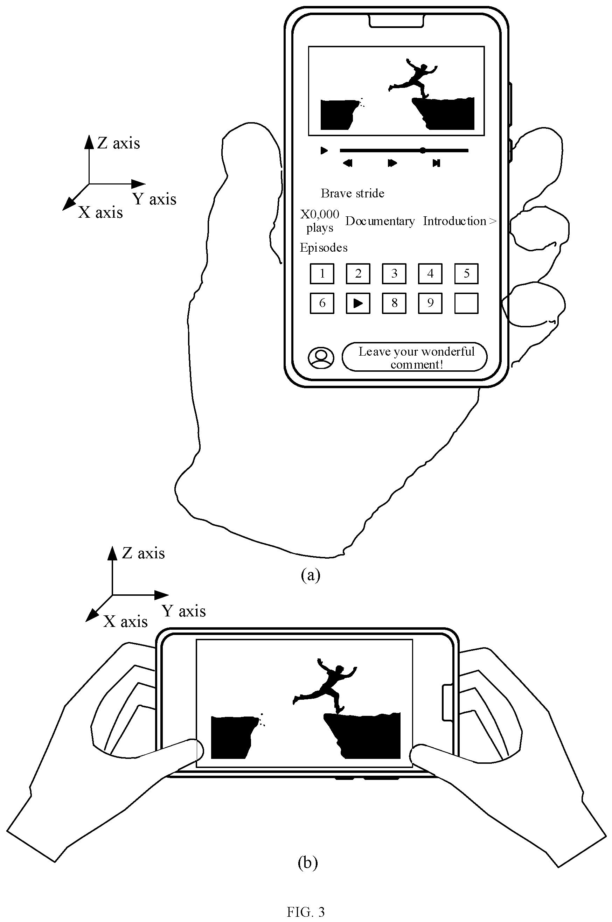

An IR image usually refers to an infrared image captured by a TOF camera. Usually, a key point of a photographed object can be found in the IR image. The key point is used for a position of a feature of the photographed object in the image. For example, key points may indicate positions of facial features of the photographed object in the IR image. Currently, in a process of using an electronic device, as a pose of a user holding the electronic device changes, a display direction of a display interface of the electronic device changes accordingly. For example, when a user holds a mobile phone vertically, the mobile phone displays an interface vertically in a Z axis direction, as shown in (a) in FIG. 3. When the user holds the mobile phone horizontally, the mobile phone displays an interface in a landscape mode along a Y axis, as shown in (b) in FIG. 3.

Generally, an acceleration sensor is disposed in an electronic device, and the acceleration sensor may detect a value and a direction of a gravity when the electronic device is still, to recognize a pose of the electronic device. The electronic device is usually further provided with a camera, for example, a camera for capturing an ambient occlusion image and a TOF camera. The camera for capturing an ambient occlusion image may be configured to capture an AO image including a human face. The electronic device may determine a pose of the electronic device by using the acceleration sensor, determine a face direction of the user based on the AO image, and further determine, based on the face direction and the pose of the electronic device, a display direction of a display interface that meets an expectation of the user.

However, in a possible case, for example, in a night with low ambient light brightness, the user lies and watches the mobile phone. In this case, because the ambient light brightness is low, pixels of the AO image captured by the camera are low, and the mobile phone cannot determine a face direction of the user based on the AO image. In addition, because a pose of the user is a lying pose, a pose of the mobile phone also changes. There is a possibility that a display direction determined based on the pose of the electronic device that is obtained by using the acceleration sensor is different from a display direction determined based on the face direction. Therefore, in this case, a display direction of the mobile phone is different from a display direction expected by the user is likely to occur.

In view of this, the display method provided in embodiments of this application is applied to an electronic device. The electronic device includes a first camera, and the first camera is a time of flight TOF camera. A first brightness of an environment in which the electronic device is located at a first moment is first obtained, a first image is further obtained when the first brightness is less than a preset threshold, then a first display direction is determined based on the first image, and finally a first interface is displayed based on the first display direction. The first image is an image captured by the first camera at the first moment. Because the first camera is a TOF camera, clarity of the image captured by the first camera is not affected by ambient light intensity. In this way, a probability that the first display direction determined based on the first image having higher clarity coincides with a display direction expected by a user can be improved, so that a display direction of a display interface can better meet the expectation of the user.

The following describes an application scenario provided in embodiments of this application with reference to the accompanying drawings.

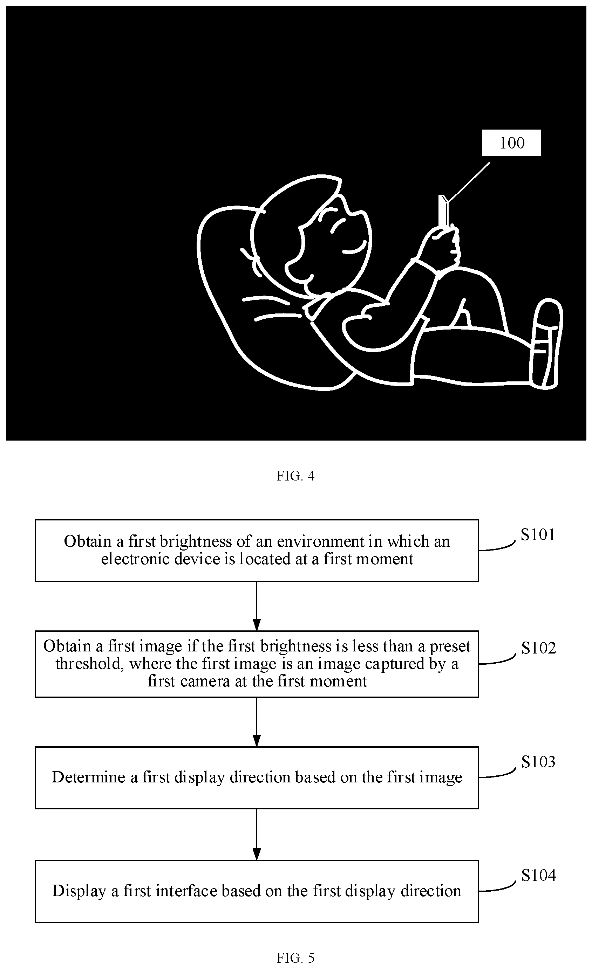

FIG. 4 is a diagram of an application scenario in which a display method is used according to an embodiment of this application. As shown in FIG. 4, a user lies in a dark-light environment and uses a mobile phone 100. Because brightness of an environment in which the user is located is low, clarity of an AO image captured by the mobile phone 100 is low. The image cannot be used for determining a face direction of the user. In addition, because the user is in a lying state, a display direction determined based on a pose of the mobile phone 100 determined by an acceleration sensor in the mobile phone 100 has a small probability of deviation from a display direction expected by the user. In a dark-light environment, the display method provided in embodiments of this application may be used to determine a display direction of the mobile phone 100, to reduce a probability that a display direction determined by the mobile phone 100 is different from a display direction expected by a user.

It should be understood that the foregoing is an example of describing the application scenario, and does not constitute any limitations on the application scenario in this application.

The following provides detailed descriptions of the display method provided in embodiments of this application with reference to FIG. 5 to FIG. 14.

FIG. 5 is a schematic flowchart of a display method according to an embodiment of this application. The method is applied to an electronic device. The electronic device includes a first camera. The first camera is a TOF camera. As shown in FIG. 5, the method includes the following steps.

S101: Obtain a first brightness of an environment in which the electronic device is located at a first moment.

For example, the electronic device may obtain the first brightness of the environment in which the electronic device is located at the first moment by using the ambient light sensor 180L shown in FIG. 1.

S102: Obtain a first image if the first brightness is less than a preset threshold.

The first image is an image captured by the first camera at the first moment.

S103: Determine a first display direction based on the first image.

The first display direction may be a display direction matching a reading direction of a user when the user holds the mobile phone. For example, when the user holds the mobile phone vertically, as shown in (a) in FIG. 3, the first display direction usually refers to a portrait display direction. When the user holds the mobile phone horizontally, as shown in (b) in FIG. 3, the first display direction is usually a landscape display direction, and a direction of display content on a display interface matches a direction in which the user holds the mobile phone.

For example, the electronic device may determine the first display direction based on a face direction in the first image. For another example, the electronic device may determine a display direction A based on the face direction in the first image, determine a display direction B based on pose data of the electronic device, and then select the first display direction from the display direction A and the display direction B based on a preset priority.

S104: Display a first interface based on the first display direction.

The first interface may be an interface that the electronic device needs to display at a current moment. For example, the first interface may be a home screen after the user wakes up a mobile phone screen, or may be an interface displayed before the user turns off a mobile phone screen, or may be a display interface at any moment after a mobile phone screen is woken up. This is not limited in embodiments of this application.

It should be understood that after determining the first display direction, the electronic device may display the first interface based on the first display direction, or may select, based on a display direction corresponding to an application currently running on the mobile phone and the first display direction, a display direction with a higher priority to display the first interface.

For example, the first display direction determined according to steps S101 to S103 is a portrait display direction. However, the currently running application of the mobile phone is an application playing a video. Because a landscape playback effect is generally better when a video is played, the mobile phone sets, to a landscape display direction, a display direction corresponding to an application playing a video. In this case, when the application playing the video runs, a priority of a display direction corresponding to the application playing the video is higher than a priority of the first display direction. Therefore, even if the first display direction determined according to steps S101 to S104 is a portrait display direction, the first interface, that is, an interface for playing the video, may still be displayed in a landscape display direction.

For example, the first display direction determined according to steps S101 to S103 is a landscape display direction. The application currently running on the mobile phone is an instant messaging application. Because a portrait display effect is generally better during instant messaging, a mobile phone generally sets, to a portrait display direction, a display direction corresponding to an instant messaging application. In this case, when the instant messaging application runs, a priority of a display direction corresponding to the instant messaging application is lower than a priority of the first display direction. Therefore, when the first display direction determined according to steps S101 to S103 is a landscape display direction, the first interface is displayed in the landscape display direction.

As shown in FIG. 2, the display direction determining module at the application framework layer may be configured to determine, from the first display direction and the display direction corresponding to the application, the display direction in which the first interface is displayed, that is, display the first interface based on the first display direction. A display method provided in embodiments of this application is applied to an electronic device. The electronic device includes a first camera, and the first camera is a time of flight TOF camera. A first brightness of an environment in which the electronic device is located at a first moment is first obtained, a first image is further obtained when the first brightness is less than a preset threshold, then a first display direction is determined based on the first image, and finally a first interface is displayed based on the first display direction. The first image is an image captured by the first camera at the first moment. Because the first camera is a TOF camera, clarity of the image captured by the first camera is not affected by ambient light intensity. In this way, a probability that the first display direction determined based on the first image having higher clarity coincides with a display direction expected by a user can be improved, so that a display direction of a display interface can better meet the expectation of the user.

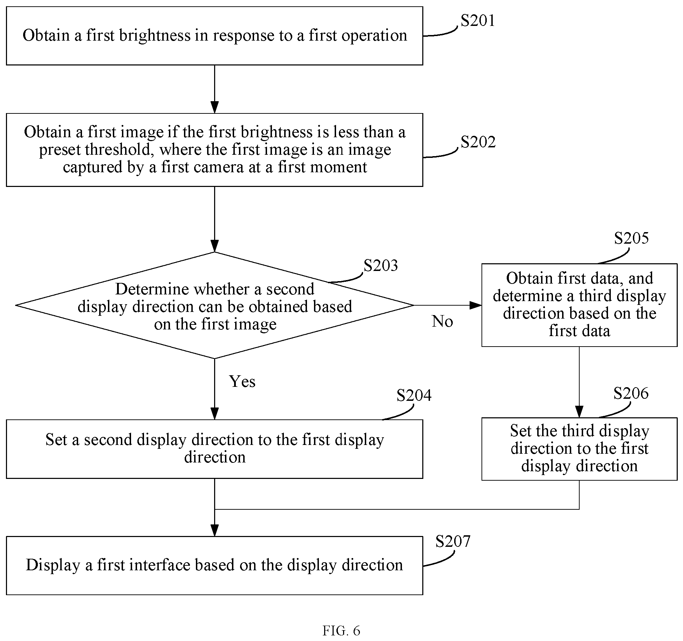

In a possible case, the display method provided in embodiments of this application may be applied to a mobile phone. The mobile phone includes an acceleration sensor configured to obtain pose information of the mobile phone, and a TOF camera configured to capture an IR image and/or a depth image. The mobile phone can determine a display direction of a display interface of the mobile phone based on the pose information collected by the acceleration sensor and/or the IR image captured by the TOF camera. When a display direction can be determined based on the IR image captured by the TOF camera, the display direction determined based on the IR image is used as the display direction of the display interface of the electronic device. When a display direction cannot be determined based on the IR image, the display direction of the display interface of the electronic device is determined based on the pose information collected by the acceleration sensor. Detailed descriptions are provided below by using an embodiment shown in FIG. 6.

FIG. 6 is a schematic flowchart of another display method according to an embodiment of this application. As shown in FIG. 6, the method is applied to a mobile phone. The mobile phone includes an acceleration sensor (equivalent to a first sensor) and a TOF camera (equivalent to a first camera). The acceleration sensor is configured to collect pose data of the mobile phone, and the TOF camera is configured to capture an IR image and/or a depth image. The method includes the following steps.

S201: Obtain a first brightness in response to a first operation.

The first brightness may be a brightness of an environment in which the mobile phone is located at a first moment, and the first operation may be used for waking up the mobile phone from a screen-off state to a screen-on state.

For example, the first operation may be an operation of swiping up, the first operation may alternatively be an operation of unlocking a screen through a fingerprint, and the first operation may alternatively be an operation of unlocking a screen through a face. This is not limited in embodiments of this application.

S202: Obtain a first image if the first brightness is less than a preset threshold.

The first image may be an image captured by the TOF camera at the first moment. The TOF camera may be the first camera. Usually, images captured by the TOF camera include an IR image and a depth image. It should be understood that, capture moments of the IR image and the depth image captured by the TOF camera are usually a same moment. S203: Determine whether a second display direction can be obtained based on the first image.

It should be understood that when clarity of the first image is less than a clarity threshold, the electronic device cannot determine a face direction in the first image based on the first image, and therefore cannot determine a display direction based on the face direction in the first image. In other words, the second display direction cannot be obtained based on the first image.

For example, the first image is an IR image. The electronic device may extract a key point indicating a feature of a photographed object from the IR image, and then determine a face direction of the photographed object based on the key point. When clarity of the IR image is excessively low, the electronic device cannot extract the key point indicating the feature of the photographed object from the IR image, or the electronic device extracts a small quantity of key points from the IR image. Both of the two cases may cause the electronic device to be unable to determine the face direction of the photographed object based on the extracted key point, and therefore the second display direction cannot be obtained. Usually, a case in which the electronic device cannot obtain a display direction based on an IR image is referred to as face loss, and a case in which the electronic device can obtain a display direction based on an IR image is referred to as human face enabling.

If the second display direction can be obtained based on the first image, S204 is performed.

If the second display direction cannot be obtained based on the first image, S205 is performed.

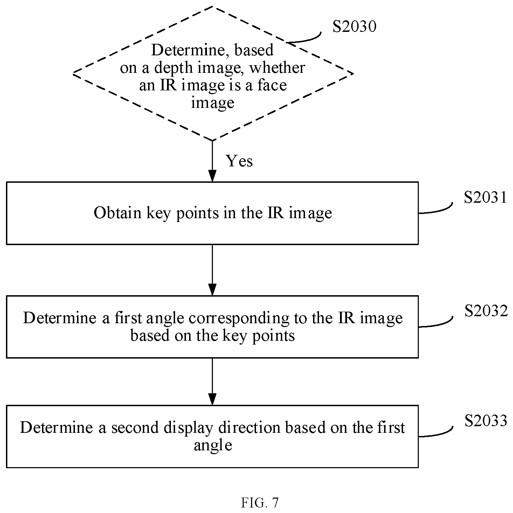

Optionally, the first image is an IR image. The mobile phone may determine the second display direction according to the method steps shown in FIG. 7. As shown in FIG. 7, the method includes the following steps.

S2031: Obtain key points in the IR image.

The key points indicate positions of facial features of a human face in the IR image.

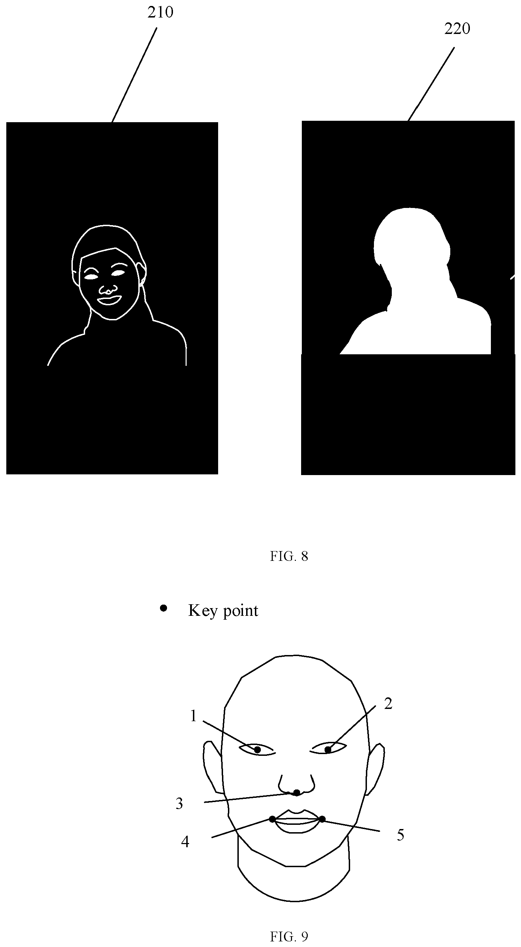

It should be understood that an IR image is usually captured by the TOF camera. Usually, the TOF camera captures a depth image at the same time when capturing the IR image. As shown in FIG. 8, an image captured by the TOF camera includes an IR image 210 and a depth image 220. An IR image indicates a temperature of a photographed object by using different colors. Because temperatures at different positions of a human body slightly differs, the IR image recognizes the different positions of the human body based on different colors. For example, when the IR image is obtained by photographing the face of the user, the electronic device can recognize positions of facial features of the face from the IR image.

The key points indicate positions of facial features of a human face in the IR image. Obtaining the key points in the IR image is equivalent to recognizing the positions of the facial features of the human face from the IR image.

For example, the IR image may be input into a preset face detection model, to obtain key points in the IR image. The key points in the IR image may be shown in FIG. 9, including a key point 1 of the left eye, a key point 2 of the right eye, a key point 3 of the nose tip, a key point 4 of the left mouth corner, and a key point 5 of the right mouth corner. The preset face detection model may be a neural network model.

Before obtaining the key points in the IR image, whether the current IR image is a human face image may be determined based on the depth image.

Before S2031 of "obtaining key points in the IR image", optionally, the method further includes:
S2030: Determine, based on the depth image, whether the IR image is a human face image, and sequentially perform S2031 to S2033 when the IR image is a human face image.

It should be understood that, the depth image is an image in which a distance from a TOF camera to a point in an image scenario is used as a pixel value. When a photographing scenario is a real human being, distances between all points in the depth image and the TOF camera are different. However, when the depth image is obtained by taking a picture or a photo, distances between all points in the depth image and the TOF camera is usually the same. Therefore, whether the IR image is obtained by photographing a human being may be determined based on distances between different points in the depth image and the TOF camera, that is, whether the IR image is a human face image, rather than an image obtained by photographing a photo or a picture, is determined. Whether the IR image is a human face image means that when the TOF camera captures an image, a corresponding photographed object is a face rather than a photo or a picture.

According to the display direction provided in embodiments of this application, before the second display direction is determined based on the IR image, whether the IR image is a human face image may be first determined based on the depth image captured at the same time with the IR image, that is, whether the IR image is obtained by photographing the photographed object, rather than being obtained by photographing a picture or a photo is determined. Then, when the IR image is obtained by photographing the photographed object, the second display direction is determined based on the IR image. This means that a case in which the second display direction is determined based on the picture or the photo is excluded before the second display direction is determined based on the IR image. The picture or the photo is not related to the pose of the user at the current moment. Therefore, a case in which the display direction of the display interface of the mobile phone is determined based on the picture or the photo is avoided, that is, a case in which the determined display direction is irrelevant to the pose of the user at the current moment is avoided, and the determined display direction can better meet an expectation of the user.

S2032: Determine a first angle corresponding to the IR image based on the key points.

The first angle is an included angle between the human face in the IR image and a preset direction.

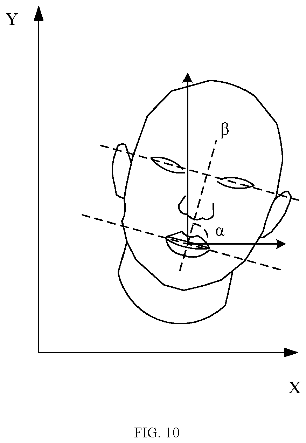

For example, as shown in FIG. 10, a face central axis $\beta$ may be determined based on positions of eyes, a nose, and a mouth in a face, and then an included angle $\alpha$, that is, the first angle, between the central axis $\beta$ and an X axis (that is, a direction perpendicular to a gravity direction) is obtained.

For example, as shown in FIG. 9, a coordinate position of a key point 1 (a left eye key point) is $(X_1, Y_1)$, a coordinate position of a key point 2 (a right eye key point) is $(X_2, Y_2)$, a coordinate position of a key point 3 (a nose tip key point) is $(X_3, Y_3)$, a coordinate position of a key point 4 (a left mouth corner key point) is $(X_4, Y_4)$, and a coordinate position of a key point 5 (the right mouth corner key point) is $(X_5, Y_5)$. The first angle $\alpha$ may be determined according to coordinates of the key points and Formula (1). Formula (1) includes:

$$\alpha = \begin{cases} \left(360^\circ + \arctan\left(\dfrac{Y_1 + Y_2 - Y_4 - Y_5}{X_1 + X_2 - X_4 - X_5}\right)\right)\% * 360^\circ, & Y_2 < Y_1 \\[2em] \left(180^\circ + \arctan\left(\dfrac{Y_1 + Y_2 - Y_4 - Y_5}{X_1 + X_2 - X_4 - X_5}\right)\right)\% * 360^\circ, & Y_2 > \cdot Y_1 \end{cases}$$

When $Y_1 = Y_2$ and $Y_4 = Y_5$, if $Y_2 > Y_3$, first angle $\alpha = 90^\circ$, or if $Y_2 < Y_5$, first angle $\alpha = 270^\circ$.

When $X_1 = X_2$, and $X_4 = X_5$, if $X_2 > X_3$, first angle $\alpha = 0^\circ$, or if $X_2 < X_3$, first angle $\alpha = 180^\circ$.

S2033: Determine the second display direction based on the first angle.

After the first angle is obtained, the second display direction may be determined based on a correspondence between the first angle and a display direction.

For example, after the first angle is obtained, a value may be assigned to a display direction parameter (a first parameter) indicating the mobile phone based on the first angle.

For example, as shown in Table 1, when the first angle $\alpha$ satisfies "$0^\circ \leq a \leq 35^\circ$ and $325^\circ \leq a \leq 360^\circ$", the first parameter is assigned a value of "0". A display direction corresponding to "0" is a left landscape display direction. In this case, the display direction is adjusted to a left landscape display direction, so that the display direction matches the face direction of the user, and the display direction of the mobile phone can meet an expectation of the user.

When the first angle $\alpha$ satisfies "$55^\circ \leq a \leq 125^\circ$", the first parameter is assigned a value of "1". A display direction corresponding to "1" is a portrait display direction. In this case, the display direction is adjusted to a portrait display direction, so that the display direction matches the face direction of the user, and the display direction of the mobile phone can meet an expectation of the user.

When the first angle $\alpha$ satisfies "$145^\circ \leq a \leq 215^\circ$", the first parameter is assigned a value of "2". A display direction corresponding to "2" is a right landscape display direction. In this case, the display direction is adjusted to a right landscape display direction, so that the display direction matches the face direction of the user, and the display direction of the mobile phone can meet an expectation of the user.

When the first angle $\alpha$ satisfies "$235^\circ \leq a \leq 305^\circ$", the first parameter is assigned a value of "3". A display direction corresponding to "3" is an inverted portrait display direction. In this case, the display direction is adjusted to an inverted portrait display direction, so that the display direction matches a face direction of the user, and the display direction of the mobile phone can meet an expectation of the user.

When the first angle $\alpha$ does not satisfy any of the foregoing conditions, the first parameter is assigned a value of "-2". When the assigned value of the first parameter is "-2", it indicates an exception, and the mobile phone does not adjust the display direction based on the assigned value of the first parameter.

**Table 1**

| Assigned value of the first parameter | Preset condition | Display direction |
|---|---|---|
| 0 | $0^\circ \leq \alpha \leq 35^\circ$ and $325^\circ \leq \alpha \leq 360^\circ$ | Left landscape display direction |
| 1 | $55^\circ \leq \alpha \leq 125$ | Portrait display direction |
| 2 | $145^\circ \leq \alpha \leq 215$ | Right landscape display direction |
| 3 | $235^\circ \leq \alpha \leq 305^\circ$ | Inverted portrait display direction |
| 4 | Other | None |
| $\alpha$ represents the first angle. | | |

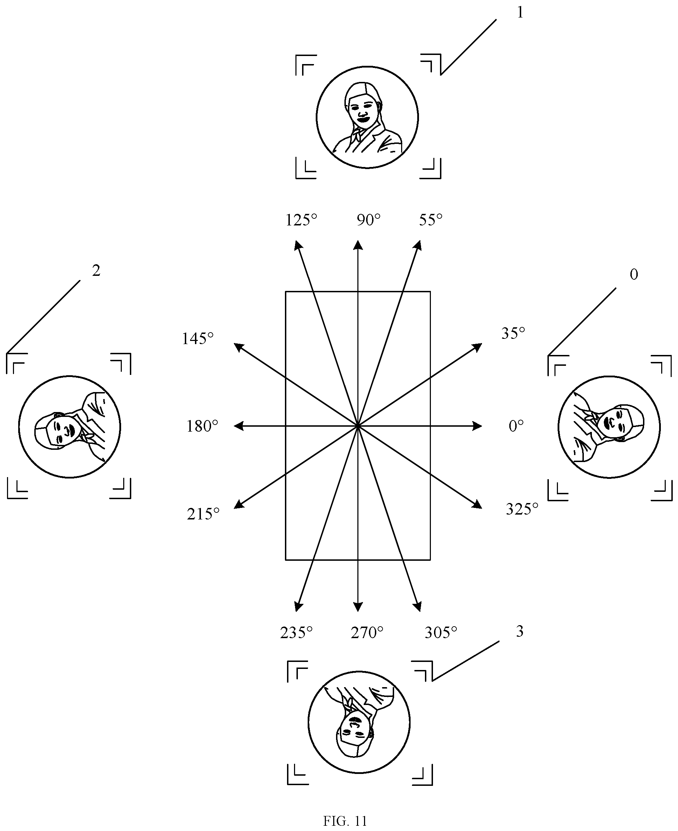

Different display directions may be shown in FIG. 11, including a left landscape display direction 0, a portrait display direction 1, a right landscape display direction 2, and an inverted portrait display direction 3.

For example, as shown in FIG. 11, when the first parameter is assigned a value of "0", the current interface is displayed in a left landscape display direction. When the first parameter is assigned a value of "1", the current interface is displayed in a portrait display direction. When the first parameter is assigned a value of "2", the current interface is displayed in a right landscape/inverted portrait display direction. When the first parameter is assigned a value of "3", the current interface is displayed in an inverted portrait display direction.

As shown in FIG. 2, the face direction recognition module at the application framework layer may be configured to perform the method steps of "determining, based on the depth image, whether the IR image is a human face image, obtaining key points in the IR image if the IR image is a human face image, determining the first angle corresponding to the IR image based on the key points, and determining the second display direction based on the first angle".

According to the display method provided in embodiments of this application, an electronic device may obtain the IR image captured by the TOF camera at the first moment, obtain the key points indicating the positions of facial features of the human face in the IR image, determine the first angle between the human face in the IR image and the preset direction based on the key points, and further determine the second display direction based on the first angle. Because the key points can indicate the positions of the facial features of the human face in the IR image, the first angle determined based on the key points can more accurately indicate the included angle between the human face and the preset direction, so that the second display direction determined based on the first angle better matches the display direction expected by the user, thereby improving user experience.

S204: Set the second display direction to a first display direction.

After the second display direction is obtained based on the first image, the second display direction may be set to the first display direction, that is, a direction indicated by the first display direction is set to be the same as a direction indicated by the second display direction.

S205: Obtain first data, and determine a third display direction based on the first data.

The first data may be the pose data collected by the acceleration sensor in the mobile phone at the first moment.

When the second display direction cannot be obtained from the first image, the third display direction is determined based on the first data. Because the first data may be the pose data collected by the acceleration sensor in the mobile phone at the first moment, the pose data may indicate an included angle between the mobile phone and a gravity direction. After the pose data is obtained, the third display direction may be determined based on the included angle, indicated by the pose data, between the mobile phone and the gravity direction.

Similar to the correspondence between the first angle and the second display direction in Table 1, there is a corresponding correspondence between pose data and a display direction. The mobile phone may determine the third display direction based on the correspondence between the pose data and the display direction.

The method steps of obtaining the first data and determining the third display direction based on the first data may be determined by a sensor direction recognition module at an application framework layer.

S206: Set the third display direction to the first display direction.

After the third display direction is obtained based on the first data, the third display direction may be set to the first display direction, that is, a direction indicated by the first display direction is set to be the same as a direction indicated by the third display direction.

S207: Display a first interface based on the first display direction.

It should be understood that when the human face is available, the first display direction is the same as the second display direction, and displaying the first interface based on the first display direction may mean displaying the first interface in the second display direction. When the human face is lost, the first display direction is the same as the third display direction, and displaying the first interface based on the first display direction may mean displaying the first interface in the third display direction.

The display direction provided in embodiments of this application is applied to an electronic device. The electronic device includes a first sensor and a first camera, where the first sensor is configured to collect pose data of the electronic device, and the first camera is a time of flight TOF camera, obtains first data and a first brightness, obtains the first brightness of an environment in which the electronic device is located at a first moment, further obtains a first image when the first brightness is less than a preset threshold, and then determines whether a second display direction can be obtained based on the first image. If the second display direction can be obtained based on the first image, a display direction of the electronic device is set to the second display direction. If the second display direction cannot be obtained based on the first image, a third display direction is determined based on the first data, and the display direction of the electronic device is set to the third display direction. This is equivalent to that in the process of determining the display direction of the electronic device, a priority of the display direction obtained based on the first image is higher than that of the display direction obtained based on the first data. Because the first image can indicate a face direction, compared with the display direction obtained based on the pose data (the first data) of the electronic device, the display direction obtained based on the face direction of a user better meets an expectation of the user, so that a display direction finally displayed by the electronic device can better meet the expectation of the user.

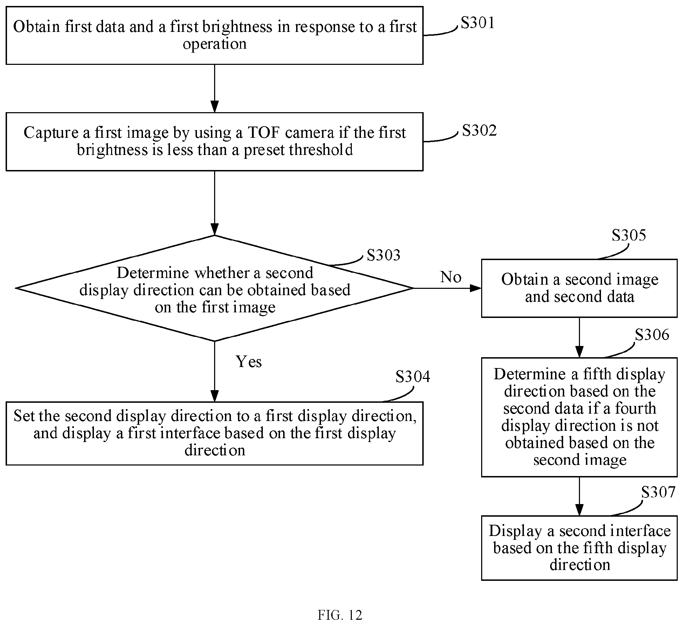

In a possible case, when the second display direction can be obtained based on the first image, it indicates that an image capture apparatus (for example, the TOF camera) of the electronic device can normally capture an image. In this case, if a face loss occurs after a current moment (that is, the second display direction cannot be determined based on the first image), the electronic device may determine the display direction of the electronic device based on the pose data. For example, the electronic device may compare a sixth display direction (a display direction determined by the electronic device again based on the pose data) with the first display direction, and if the sixth display direction is the same as the first display direction, use the first display direction as the display direction of the display interface of the mobile phone. If the sixth display direction is different from the first display direction, the first display direction is used as the display direction of the display interface of the mobile phone, the TOF camera is started again to capture an image, and the captured image is used as an image for determining a display direction of the display interface of the mobile phone at a next moment. Detailed descriptions are provided below by using an embodiment shown in FIG. 12.

FIG. 12 is a schematic flowchart of another display method according to an embodiment of this application. As shown in FIG. 12, the method is applied to a mobile phone. The mobile phone includes an acceleration sensor and a TOF camera. The acceleration sensor is configured to collect pose data of the mobile phone, and the TOF camera is configured to capture an IR image and/or a depth image. The method includes the following steps.

S301: Obtain first data and a first brightness in response to a first operation.

The first data may be pose data collected by the acceleration sensor in the mobile phone at a first moment, the first brightness may be a brightness of an environment in which the mobile phone is located at the first moment, and the first operation may be used for waking up the mobile phone from a screen-off state to a screen-on state.

For example, the first operation may be an operation of swiping up, the first operation may alternatively be an operation of unlocking a screen through a fingerprint, and the first operation may alternatively be an operation of unlocking a screen through a face. This is not limited in embodiments of this application.

After obtaining the first data, the electronic device may alternatively determine a candidate display direction based on the first data, and store the candidate display direction, to invoke the candidate display direction in a subsequent process of determining a display direction of the electronic device.

S302: Capture a first image by using the TOF camera if the first brightness is less than a preset threshold.

For example, the preset threshold may be 15 lux (lux). The TOF camera captures the first image when the first brightness is less than 15 lux.

S303: Determine whether a second display direction can be obtained based on the first image.

The second display direction may be a display direction determined based on a correspondence between the first image and the display direction.

If the second display direction can be obtained based on the first image, S304 is performed.

For a process of obtaining the second display direction based on the first image, refer to the method step shown in S203. Details are not described herein again.

If the second display direction cannot be obtained based on the first image, S305 is performed.

S304: Set the second display direction to a first display direction, and display a first interface based on the first display direction.

A display direction of a display interface of the mobile phone may be the first display direction.

S305: Obtain a second image and second data.

The second image is an image captured by the TOF camera at a second moment, and the second moment is a moment after the first moment. The second data is pose data collected by the acceleration sensor at the second moment.

It should be understood that the electronic device may periodically determine the display direction of the display interface according to a preset frequency. The first moment may be a moment of an $N^{th}$ frame indicated by the preset frequency, and the second moment may be a moment of an $(N+m)^{th}$ frame. In a possible case, the second moment may be a moment of an $(N+1)^{th}$ frame.

S306: Determine a fifth display direction based on the second data if a fourth display direction is not obtained based on the second image.

Because the second image is an image captured at the second moment, and the second moment is a moment after the first moment, because a display direction can be determined based on the first image captured by the electronic device at the first moment, this is equivalent to enabling a human face at the first moment. Therefore, a case in which the fourth display direction cannot be obtained based on the second image is equivalent to that the human face is lost after the human face is available. In this case, the electronic device may further obtain the pose data (that is, the second data) at the second moment by using the first sensor (equivalent to the acceleration sensor), and then determine the fifth display direction based on the second data. Then, a second interface, that is, an interface displayed by the electronic device at the second moment, is displayed in the fifth display direction. It should be understood that the first interface and the second interface may be a same display interface or may be different display interfaces. This is not limited in embodiments of this application.

When the second image cannot obtain the fourth display direction, the fifth display direction corresponding to the second data may be first determined based on a correspondence between pose data of the electronic device and a display direction. The method steps of obtaining the second data and determining the fifth display direction based on the second data may be determined by a sensor direction recognition module at an application framework layer.

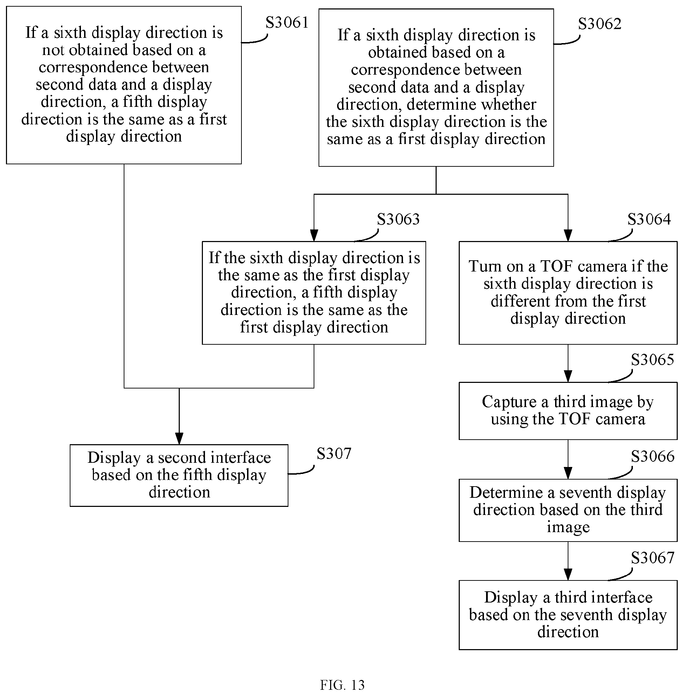

Optionally, the determining a fifth display direction based on the second data may be implemented by steps shown in FIG. 13. As shown in FIG. 13, the steps include the following.

S3061: If a sixth display direction is not obtained based on a correspondence between the second data and a display direction, the fifth display direction is the same as the first display direction.

To be specific, if the display direction cannot be determined based on the pose data of the electronic device at the second moment, the first display direction in which the first interface is displayed at a previous moment (that is, the first moment) is used as the display direction in which the second interface is displayed at a current moment (that is, the second moment). In other words, the fifth display direction is the same as the first display direction.

In the display method provided in embodiments of this application, when the fourth display direction cannot be obtained based on the second image, whether the sixth display direction can be obtained based on the correspondence between the second data and the display direction is first determined, and if the sixth display direction cannot be obtained based on the correspondence between the second data and the display direction, the first display direction is used as the fifth display direction, so that when a display direction cannot be obtained based on both the image captured by the first camera and the pose data of the electronic device, the first display direction in which the first interface is displayed last time is used as the fifth display direction in which the second interface is currently displayed, to avoid a problem that the display direction of the second interface cannot be determined.

S3062: If a sixth display direction is obtained based on a correspondence between the second data and a display direction, determine whether the sixth display direction is the same as the first display direction.

In other words, when the display direction can be determined based on the pose data of the electronic device at the second moment, whether the sixth display direction (equivalent to the display direction determined based on the pose data at the second moment) is the same as the first display direction is further determined.

S3063: If the sixth display direction is the same as the first display direction, the fifth display direction is the same as the first display direction.

In other words, when the display direction (the sixth display direction) determined based on the pose data at the second moment is the same as the first display direction, the display direction (the sixth display direction) determined based on the pose data collected by the first sensor (the acceleration sensor) is used as the display direction (the fifth display direction) of the second interface.

In the display method provided in embodiments of this application, when the fourth display direction cannot be obtained based on the second image, whether the sixth display direction can be obtained based on the correspondence between the second data and the display direction is first determined. If the sixth display direction can be obtained based on the correspondence between the second data and the display direction, whether the sixth display direction is the same as the first display direction is further determined; and when the sixth display direction is the same as the first display direction, the display direction in which the second interface is displayed, that is, the sixth display direction obtained based on the correspondence between the second data and the display direction is set to the first display direction. Usually, the display direction of the electronic device does not frequently change. When the display direction determined at the first moment is the first display direction, there is a higher probability that the display direction of the electronic device at the second moment is the same as the first display direction. Therefore, when the display direction can be determined based only on the second data, after it is first determined that the display direction determined based on the second data is the same as the first display direction at the first moment, the display direction in which the second interface is displayed is set to be the same as the display direction in which the first interface is displayed at the first moment, so that a probability that the display direction determined based on the pose data of the electronic device does not coincide with the display direction expected by the user can be reduced, and user experience is improved.

In a possible case, if the sixth display direction is different from the first display direction, the method further includes: S3064: Turn on the TOF camera if the sixth display direction is different from the first display direction.

When the display direction (the sixth display direction) determined based on the pose data (the second data) at the second moment is different from the first display direction, to avoid a case in which the display direction determined based on the pose data of the electronic device does not coincide with a display direction expected by the user, the electronic device may wake up the TOF camera again, and further capture, by using the TOF camera, an image used for determining a display direction at a next moment (that is, a third moment).

S3065: Capture a third image by using the TOF camera.

The third image includes an image captured by the TOF camera at the third moment, and the third moment is a moment after the second moment.

S3066: Determine a seventh display direction based on the third image.

It should be understood that a specific process of determining the seventh display direction based on the third image is similar to the method steps shown in S2031 to S2033. Details are not described herein again.

S3067: Display a third interface based on the seventh display direction.

It should be understood that the third interface, the first interface, and the second interface may be a same display interface or may be different display interfaces. This is not limited in embodiments of this application.

It should be understood that a face loss fusion module at the application framework layer may be configured to perform the method steps shown in S3061 to S3065.

In the display method provided in embodiments of this application, when the fourth display direction cannot be obtained based on the second image, whether the sixth display direction can be obtained based on the correspondence between the second data and the display direction is first determined. If the sixth display direction can be obtained based on the correspondence between the second data and the display direction, whether the sixth display direction is the same as the first display direction is further determined; the TOF camera is turned on if the sixth display direction is different from the first display direction, the third image is obtained by using the TOF camera, then the seventh display direction is determined based on the third image, and finally the third interface is displayed based on the seventh display direction. In this way, even if the display direction of the second interface cannot be accurately determined based on the second image and/or the second data at the second moment, a display direction of the third interface can be determined at a next moment (that is, the third moment) based on the third image captured by the TOF camera. In other words, the display direction in which the third interface is displayed at the third moment is obtained based on the third image captured by the TOF camera, and better coincides with a display direction expected by the user, thereby improving user experience.

S307: Display the second interface based on the fifth display direction.

A specific process of displaying the second interface based on the fifth display direction is similar to the specific process of "displaying the first interface based on the first display direction" of S104. Details are not described herein again.

A display method provided in embodiments of this application is applied to an electronic device. The electronic device includes a first sensor and a first camera, where the first sensor is configured to collect pose data of the electronic device, and the first camera is a time of flight TOF camera, obtains first data and a first brightness, obtains the first brightness of an environment in which the electronic device is located at a first moment, further obtains a first image when the first brightness is less than a preset threshold, and then determines whether a second display direction can be obtained based on the first image. If the second display direction can be obtained based on the first image, a display direction of the electronic device is set to a display direction indicated by the second display direction. In addition, after the second display direction can be obtained based on the first image, if a corresponding display direction cannot be obtained again based on an image captured by the TOF camera, whether a display direction determined based on pose data is the same as the first display direction is compared to determine a fifth display direction in which a second interface is displayed at a next moment. Usually, a display direction of the electronic device does not frequently change, and when the display direction determined at the first moment is the first display direction, there is a higher probability that the display direction of the electronic device is the same as the first display direction at the second moment. Therefore, when a human face is lost (that is, a fourth display direction cannot be obtained based on a second image) after the human face is available (that is, the second display direction can be obtained based on the first image), it is first determined that the display direction determined based on the second data is the same as the first display direction at the first moment, and then the display direction in which the second interface is displayed is set to be the same as the display direction in which the first interface is displayed at the first moment. This can reduce a probability that the display direction determined based on the pose data of the electronic device does not coincide with a display direction expected by a user, and improves user experience.

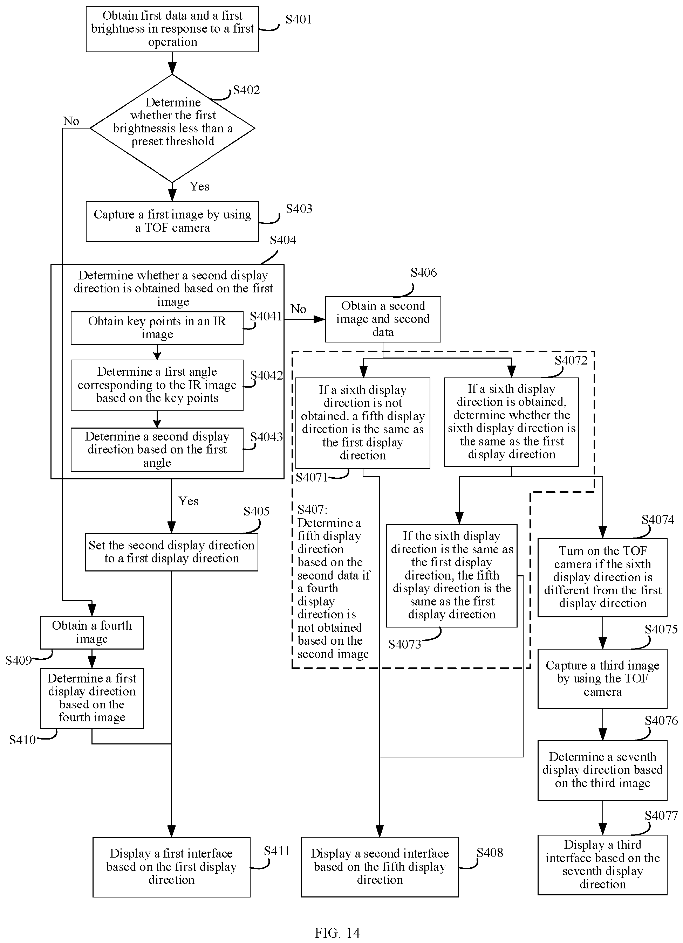

In a possible case, when a screen of a mobile phone is woken up, whether an ambient light intensity of a current environment is low needs to be first determined. When the ambient light intensity is weak, a TOF camera is woken up, and a display direction of a display interface of the mobile phone is determined based on an image captured by the TOF camera. When the ambient light intensity is not weak, a second camera is directly used to capture an AO image, to determine a display direction of a display interface of the mobile phone. Detailed descriptions are provided below by using an embodiment shown in FIG. 14.

FIG. 14 is a schematic flowchart of another display method according to an embodiment of this application. As shown in FIG. 14, the method is applied to a mobile phone. The mobile phone includes an acceleration sensor, a TOF camera, and an ambient occlusion camera. The acceleration sensor is configured to collect pose data of the mobile phone, the TOF camera is configured to capture an IR image and/or a depth image, and the ambient occlusion camera is configured to capture an AO image. The method includes the following steps.

S401: Obtain first data and a first brightness in response to a first operation.

The first data may be pose data collected by the acceleration sensor in the mobile phone at a first moment, the first brightness may be a brightness of an environment in which the mobile phone is located at the first moment, and the first operation may be used for waking up the mobile phone from a screen-off state to a screen-on state.

For example, the first operation may be an operation of swiping up, the first operation may alternatively be an operation of unlocking a screen through a fingerprint, and the first operation may alternatively be an operation of unlocking a screen through a face. This is not limited in embodiments of this application.

S402: Determine whether the first brightness is less than a preset threshold.

If the first brightness is less than the preset threshold, S403 is performed.

If the first brightness is greater than or equal to the preset threshold, S409 is performed.

S403: Capture a first image by using the TOF camera.

The first image is an IR image captured by the TOF camera at the first moment.

S404: Determine whether a second display direction can be obtained based on the first image.

Optionally, a specific process of obtaining the second display direction based on the first image may include the following steps.

S4041: Obtain key points in an IR image.

S4042: Determine a first angle corresponding to the IR image based on the key points.

S4043: Determine a second display direction based on the first angle.

If the second display direction can be obtained based on the first image, S405 is performed.

If the second display direction cannot be obtained based on the first image, S406 is performed.

S405: Set the second display direction to a first display direction.

It should be understood that because power consumption of the TOF camera is usually large, the TOF camera may be turned off after the first image is captured, or the TOF camera may be turned off after the second display direction is obtained based on the first image, to reduce power consumption brought by the TOF camera.

S406: Obtain a second image and second data.

S407: Determine a fifth display direction based on the second data if a fourth display direction is not obtained based on the second image.

Optionally, a specific process of determining a fifth display direction based on the second data may include the following steps.

S4071: If a sixth display direction is not obtained based on a correspondence between the second data and a display direction, the fifth display direction is the same as the first display direction.

S4072: If a sixth display direction is obtained based on a correspondence between the second data and a display direction, determine whether the sixth display direction is the same as the first display direction.

In other words, when the display direction can be determined based on pose data of the electronic device at a second moment, whether the sixth display direction (equivalent to the display direction determined based on the pose data at the second moment) is the same as the first display direction is further determined.

S4073: If the sixth display direction is the same as the first display direction, the fifth display direction is the same as the first display direction.

In other words, when the display direction (the sixth display direction) determined based on the pose data at the second moment is the same as the first display direction, the display direction (the sixth display direction) determined based on the pose data collected by the first sensor (the acceleration sensor) is used as a display direction (the fifth display direction) of a second interface.

In a possible case, if the sixth display direction is different from the first display direction, the method further includes: S4074: Turn on the TOF camera if the sixth display direction is different from the first display direction.

When the display direction (the sixth display direction) determined based on the pose data at the second moment is different from the first display direction, to avoid a case in which the display direction determined based on the pose data of the electronic device does not coincide with a display direction expected by a user, the electronic device may wake up the TOF camera again, and further capture, by using the TOF camera, an image used for determining a display direction at a next moment.

S4075: Capture a third image by using the TOF camera.

The third image includes an image captured by the TOF camera at a third moment, and the third moment is a moment after the second moment.

S4076: Determine a seventh display direction based on the third image.

It should be understood that a specific process of determining the seventh display direction based on the third image is similar to the method steps shown in S2031 to S2033. Details are not described herein again.

S4077: Display a third interface based on the seventh display direction.

It should be understood that the third interface, the first interface, and the second interface may be a same display interface or may be different display interfaces. This is not limited in embodiments of this application.

It should be understood that a face loss fusion module at an application framework layer may be configured to perform the method steps shown in S4071 to S4075.

S408: Display the second interface based on the fifth display direction.

S409: Obtain a fourth image.

The fourth image is an AO image captured by an ambient occlusion camera at the first moment. Because power consumption of the TOF camera is large, and power consumption of the ambient occlusion camera is low, when the first brightness is greater than or equal to the preset threshold, a face direction in the image can be determined based on clarity of the AO image captured by the ambient occlusion camera, the TOF camera may be turned off, and the first display direction is determined based on the AO image captured by the ambient occlusion camera.

S410: Determine a first display direction based on the fourth image.

S411: Display a first interface based on the first display direction.

A display method provided in embodiments of this application is applied to an electronic device. The electronic device includes a first sensor, a first camera, and a second camera. The first sensor is configured to collect pose data of the electronic device, the first camera is a time of flight TOF camera, and the second camera is an ambient occlusion camera configured to capture an AO image. The method includes: obtaining first data and a first brightness in response to a first operation, obtaining a first image when the first brightness is less than a preset threshold, and determining a first display direction based on the first data and/or the first image; obtaining a fourth image when the first brightness is greater than or equal to the preset threshold, and determining the first display direction based on the first data and/or the fourth image; and finally, displaying a first interface based on the first display direction. In other words, according to the display method provided in this application, when ambient light is weak, the first display direction can be determined based on the first image that is captured by the TOF camera and that is not affected by ambient light intensity. When ambient light is strong, the first display direction can be determined based on the AO image that is captured by the ambient occlusion camera and that has lower power consumption. Therefore, when the ambient light is weak, a probability that the first display direction determined based on the first image having higher clarity and/or the first data coincides with a display direction expected by a user can be improved. When the ambient light is strong, the first display direction is determined based on the AO image using low power consumption, to reduce power consumption of the electronic device.

Although the steps in the flowcharts of the embodiments are displayed sequentially according to indications of arrows, these steps are not necessarily performed sequentially according to a sequence indicated by the arrows. Unless clearly specified in this specification, there is no strict sequence limitation on the execution of the steps, and the steps may be performed in another sequence. Moreover, at least some of the steps in the flowchart may include a plurality of sub-steps or a plurality of stages. The sub-steps or stages are not necessarily performed at the same moment but may be performed at different moments. The sub-steps or stages are not necessarily performed sequentially, but may be performed in turn or alternately with another step or at least some of sub-steps or stages of the another step.

It may be understood that, to implement the foregoing functions, the electronic device includes corresponding hardware and/or software modules for performing the functions. Algorithm steps in examples described in embodiments disclosed in this specification may be implemented by hardware or a combination of hardware and computer software in this application. Whether a function is performed by hardware or hardware driven by computer software depends on particular applications and design constraints of the technical solutions. A person skilled in the art may use different methods to implement the described functions of each particular application with reference to the embodiments, but it should not be considered that the implementation goes beyond the scope of this application. In embodiments of this application, functional modules of the electronic device may be divided based on the foregoing method examples. For example, each function module may be obtained through division based on each corresponding function, or two or more functions may be integrated into one module. It should be noted that, in embodiments of this application, module division is an example, and is merely a logical function division. In actual implementation, another division manner may be used. It should be noted that, in embodiments of this application, names of modules are examples. In actual implementation, names of modules are not limited.

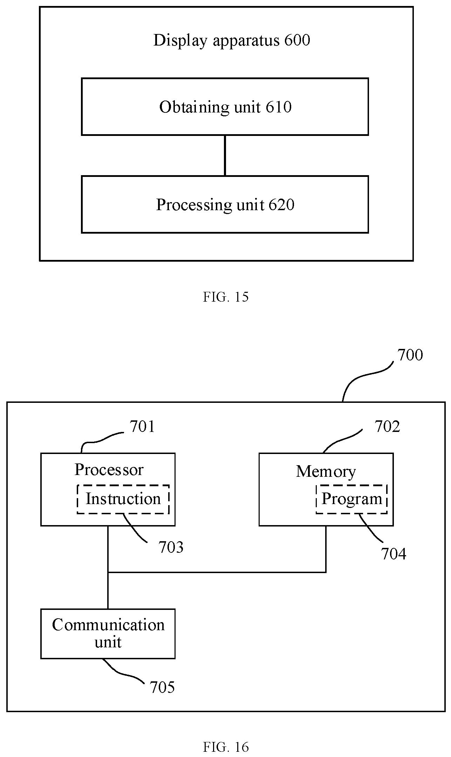

FIG. 15 is a diagram of a structure of a display apparatus according to an embodiment of this application.

It should be understood that the display apparatus 600 may perform the display methods shown in FIG. 5 to FIG. 14. The display apparatus 600 includes an obtaining unit 610 and a processing unit 620.

The obtaining unit 610 is configured to obtain a first brightness of an environment in which an electronic device is located at a first moment.

The processing unit 620 is configured to: obtain a first image if the first brightness is less than a preset threshold, where the first image is an image captured by a first camera at a first moment; determine a first display direction based on the first image; and display a first interface based on the first display direction.

In an embodiment, the processing unit 620 is further configured to: if a second display direction is obtained based on the first image, the first display direction being the same as the second display direction; obtain first data if the second display direction is not obtained based on the first image, where the first data is pose data of the electronic device collected by a first sensor at the first moment; and if a third display direction is determined based on the first data, the first display direction is the same as the third display direction.

In an embodiment, the obtaining unit 610 is further configured to obtain key points in an IR image, where the key points indicate positions of facial features of a human face in the IR image. The processing unit 620 is further configured to: determine a first angle corresponding to the IR image based on the key points, where the first angle is an included angle between the human face in the IR image and a preset direction; and determine the second display direction based on the first angle.

In an embodiment, the processing unit 620 is further configured to determine, based on a depth image, whether the IR image is a human face image; and determine the second display direction based on the IR image if the IR image is a human face image.

In an embodiment, the obtaining unit 610 is further configured to obtain a second image and second data, where the second image includes an image captured by the first camera at a second moment, the second moment is a moment after the first moment, and the second data is pose data collected by the first sensor at the second moment. The processing unit 620 is further configured to: determine a fifth display direction based on the second data if a fourth display direction is not obtained based on the second image; and display a second interface based on the fifth display direction.

In an embodiment, the processing unit 620 is further configured to: if a sixth display direction is not obtained based on a correspondence between the second data and a display direction, the fifth display direction being the same as the first display direction.

In an embodiment, the processing unit 620 is further configured to: if a sixth display direction is obtained based on a correspondence between the second data and a display direction, determine whether the sixth display direction is the same as the first display direction; and if the sixth display direction is the same as the first display direction, the fifth display direction being the same as the first display direction.

In an embodiment, the processing unit 620 is further configured to: turn on the first camera if the sixth display direction is different from the first display direction; obtain a third image by using the first camera, where the third image includes an image captured by the first camera at a third moment, and the third moment is a moment after the second moment; and determine a seventh display direction based on the third image.

In an embodiment, the processing unit 620 is further configured to: obtain a fourth image if the first brightness is greater than or equal to the preset threshold, where the fourth image is an image captured by a second camera at the first moment; determine the first display direction based on the fourth image; and display the first interface based on the first display direction.

In an embodiment, the processing unit 620 is further configured to turn off the first camera.

The display apparatus provided in embodiments may be configured to perform the display methods in the foregoing embodiments. Implementation principles and technical effects are similar. Details are not described herein again.

It should be noted that, the display apparatus 600 is represented in a form of a functional module. The term "unit" herein may be implemented in a form of software and/or hardware. This is not specifically limited.

For example, the "unit" may be a software program, a hardware circuit or a combination of the software program the hardware circuit for realizing the above functions. The hardware circuit may include an application specific integrated circuit (application specific integrated circuit, ASIC), an electronic circuit, a processor (for example, a shared processor, a dedicated processor, or a packet processor) configured to execute one or more software or firmware programs, a memory, a combined logic circuit, and/or another suitable component that supports the described functions. Therefore, the units of each example described in embodiments of this application may be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

FIG. 16 is a diagram of a structure of an electronic device according to this application. A dashed line in FIG. 16 indicates that the unit or the module is optional. The electronic device 700 may be configured to implement the display method described in the foregoing method embodiments.

The electronic device 700 includes one or more processors 701, and the one or more processors 701 may support the electronic device 700 in implementing the display method in the method embodiments. The processor 701 may be a general-purpose processor, a dedicated processor, or the like. For example, the processor 701 may be a central processing unit (central processing unit, CPU), a digital signal processor (digital signal processor, DSP), an application-specific integrated circuit (application-specific integrated circuit, ASIC), a field programmable gate array (field programmable gate array, FPGA), or another programmable logic device, a discrete gate or a transistor logic device, discrete hardware component, or the like.

Optionally, the processor 701 may be configured to control the electronic device 700, execute a software program, and process data of the software program. The electronic device 700 may further include a communication unit 705, configured to implement input (receiving) and output (sending) of signals.

For example, the electronic device 700 may be a chip, and the communication unit 705 may be an input and/or output circuit of the chip, or the communication unit 705 may be a communication interface of the chip. The chip may be used as a component of a terminal device or another electronic device.

For another example, the electronic device 700 may be a terminal device, the communication unit 705 may be a transceiver of the terminal device, or the communication unit 705 may be a transceiver circuit of the terminal device. For another example, the electronic device 700 may include one or more memories 702, and a program 704 is stored in the memory 702. The program 704 may be run by the processor 701, to generate instructions 703, so that the processor 701 performs, according to the instructions 703, the impedance matching method described in the method embodiments.

Optionally, the memory 702 may further store data. Optionally, the processor 701 may further read the data stored in the memory 702. The data and the program 704 may be stored at a same storage address, or the data and the program 704 may be stored at different storage addresses.

The processor 701 and the memory 702 may be disposed separately, or may be integrated together, for example, integrated on a system on chip (system on chip, SOC) of the terminal device.

For example, the memory 702 may be configured to store a program 704 related to the display method provided in embodiments of this application. The processor 701 may be configured to: invoke the program 704 related to the display method stored in the memory 702 when performing the display method, and perform the display method according to embodiments of this application. The method includes: obtaining a first brightness of an environment in which the electronic device is located at a first moment;

obtaining a first image if the first brightness is less than a preset threshold, where the first image is an image captured by the first camera at the first moment; determining a first display direction based on the first image; and displaying a first interface based on the first display direction.

This application further provides a computer program product. The computer program product, when executed by the processor 701, implements the display method according to any method embodiment of this application.

For example, the computer program product, for example, a program 704 may be stored in the memory 702. The program 704 is finally converted into an executable target file that may be performed by the processor 701 through processing processes such as preprocessing, compilation, assembly, and linking.

This application further provides a computer-readable storage medium, and computer-readable storage medium stores a computer program. The computer program, when executed by a computer, implements the display method according to any method embodiment of this application. The computer program may be a high-level language program or an executable object program.

For example, the computer-readable storage medium is, for example, the memory 702. The memory 702 may be a volatile memory or a nonvolatile memory, or the memory 702 may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In embodiments of this application, "at least one" means one or more, and "plurality of" means two or more. "At least one of the following items (pieces)" or a similar expression thereof refers to any combination of these items, including a single item (piece) or any combination of a plurality of items (pieces). For example, at least one of a, b, or c may represent: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art can clearly understand that for convenience and conciseness of description, for detailed working processes of the foregoing system, apparatus, and unit, refer to corresponding processes in the foregoing method embodiments. Details are not described herein again.

In the several embodiments provided in this application, the disclosed apparatus and method may be implemented in other manners. For example, the described apparatus embodiments are merely examples. For example, the module division is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A display method, wherein the method is applied to an electronic device, the electronic device comprises a first camera, the first camera is a time of flight TOF camera, and the method comprises:

    obtaining a first brightness of an environment in which the electronic device is located at a first moment;
    obtaining a first image if the first brightness is less than a preset threshold, wherein the first image is an image captured by the first camera at the first moment;
    determining a first display direction based on the first image; and
    displaying a first interface based on the first display direction.

2. The method according to claim 1, wherein the electronic device further comprises a first sensor, the first sensor is configured to collect pose data of the electronic device, and the determining a first display direction based on the first image comprises:

    if a second display direction is obtained based on the first image, the first display direction being the same as the second display direction; or
    if a second display direction is not obtained based on the first image, obtaining first data, wherein the first data is pose data of the electronic device collected by the first sensor at the first moment; and
    determining a third display direction based on the first data, wherein the first display direction is the same as the third display direction.

3. The method according to claim 2, wherein the first image comprises an infrared IR image, and the method further comprises:

    obtaining key points in the IR image, wherein the key points indicate positions of facial features of a human face in the IR image;
    determining a first angle corresponding to the IR image based on the key points, wherein the first angle is an included angle between the human face in the IR image and a preset direction; and
    determining the second display direction based on the first angle.

4. The method according to claim 3, wherein the first image further comprises a depth image, and the method further comprises:

    determining, based on the depth image, whether the IR image is a human face image; and
    determining the second display direction based on the IR image if the IR image is a human face image.

5. The method according to any one of claims 2 to 4, wherein after the second display direction is obtained based on the first image, the method further comprises:

    obtaining a second image and second data, wherein the second image comprises an image captured by the first camera at a second moment, the second moment is a moment after the first moment, and the second data is pose data collected by the first sensor at the second moment;
    determining a fifth display direction based on the second data if a fourth display direction is not obtained based on the second image; and
    displaying a second interface based on the fifth display direction.

6. The method according to claim 5, wherein the determining a fifth display direction based on the second data comprises:
    if a sixth display direction is not obtained based on a correspondence between the second data and a display direction, the fifth display direction being the same as the first display direction.

7. The method according to claim 5, wherein the determining a fifth display direction based on the second data comprises:

    if a sixth display direction is obtained based on a correspondence between the second data and a display direction, determining whether the sixth display direction is the same as the first display direction; and
    if the sixth display direction is the same as the first display direction, the fifth display direction being the same as the first display direction.

8. The method according to claim 7, wherein the method further comprises:

turning on the first camera if the sixth display direction is different from the first display direction;
obtaining a third image by using the first camera, wherein the third image comprises an image captured by the first camera at a third moment, and the third moment is a moment after the second moment; and
determining a seventh display direction based on the third image.

9. The method according to any one of claims 1 to 8, wherein the electronic device further comprises a second camera, wherein the second camera is configured to capture an ambient occlusion AO image, and the method further comprises:

obtaining a fourth image if the first brightness is greater than or equal to the preset threshold, wherein the fourth image is an image captured by the second camera at the first moment;
determining the first display direction based on the fourth image; and
displaying the first interface based on the first display direction.

10. The method according to any one of claims 1 to 9, wherein after the obtaining a first image, the method further comprises:
turning off the first camera.

11. An electronic device, wherein the electronic device comprises a module configured to perform the method according to any one of claims 1 to 10.

12. An electronic device, comprising:

one or more processors;
a memory; and
one or more computer programs, wherein the one or more computer programs are stored in the memory, and when the computer program is executed by the one or more processors, the electronic device is enabled to perform the method according to any one of claims 1 to 10.

13. A chip system, wherein the chip system comprises a processor, configured to invoke a computer program from a memory, and run the computer program, to enable an electronic device on which the chip system is installed to perform the method according to any one of claims 1 to 10.

14. A computer-readable storage medium, comprising a computer program, wherein when the computer program is run on an electronic device, the electronic device is enabled to perform the method according to any one of claims 1 to 10.

Electronic device 100

Antenna 1    Antenna 2

| Mobile communication module 150 | Wireless communication module 160 |

| Speaker 170A | | |
| Receiver 170B | Audio module 170 | |
| Microphone 170C | | |
| Headset jack 170D | | |

Display 194

Camera 193

Indicator 192

Motor 191

Button 190

Internal memory 121

SIM card interface 195

External memory interface 120

Processor

110

Sensor module 180

Pressure sensor 180A

Gyroscope sensor 180B

Barometric pressure sensor 180C

Magnetic sensor 180D

Acceleration sensor 180E

Distance sensor 180F

Optical proximity sensor 180G

Fingerprint sensor 180H

Temperature sensor 180J

Touch sensor 180K

Ambient light sensor 180L

Bone conduction sensor 180M

USB interface 130

Charging input

Charging management module 140

Power management module 141

Battery 142

FIG. 1

| Application layer | Camera | Calendar | Map | WLAN | Music | Messages |
|---|---|---|---|---|---|---|
| | Gallery | Call | Navigation | Bluetooth | Video | ... |

| Application frame layer | Display direction determining module | Face direction recognition module | Sensor direction recognition module | Face loss fusion module |
|---|---|---|---|---|
| | Window manager | Content provider | Phone manager | Resource manager |
| | Notification manager | View system | ... | |

| System library | Surface manager | Three-dimensional graphics processing library | Android runtime |
|---|---|---|---|
| | Two-dimensional graphics engine | Media library | ... |

| Kernel layer | Display driver | Camera driver | Audio driver |
|---|---|---|---|
| | Sensor driver | ... | |

FIG. 2

Z axis
Y axis
X axis

Brave stride

X0,000 plays   Documentary   Introduction >

Episodes

| 1 | 2 | 3 | 4 | 5 |
| 6 | ▶ | 8 | 9 |   |

Leave your wonderful comment!

(a)

Z axis
Y axis
X axis

(b)

FIG. 3

100

FIG. 4

Obtain a first brightness of an environment in which an electronic device is located at a first moment    S101

Obtain a first image if the first brightness is less than a preset threshold, where the first image is an image captured by a first camera at the first moment    S102

Determine a first display direction based on the first image    S103

Display a first interface based on the first display direction    S104

FIG. 5

EP 4 600 783 A1

```
┌─────────────────────────────────────────┐  S201
│ Obtain a first brightness in response to a first operation │
└─────────────────────────────────────────┘
                    │
                    ▼
┌─────────────────────────────────────────┐  S202
│ Obtain a first image if the first brightness is less than a │
│ preset threshold, where the first image is an image │
│ captured by a first camera at a first moment │
└─────────────────────────────────────────┘
                    │
                    ▼
                                              S205
                                    ┌──────────────────┐
       S203                         │ Obtain first data, and │
    ◇ Determine whether a second    │ determine a third display │
      display direction can be      │ direction based on the │
      obtained based                │ first data │
      on the first image ◇──No──▶   └──────────────────┘
              │                              │
             Yes                            S206
              │          S204       ┌──────────────────┐
              ▼                     │ Set the third display │
    ┌──────────────────┐           │ direction to the first │
    │ Set a second display direction │ display direction │
    │ to the first display direction │ └──────────────────┘
    └──────────────────┘                   │
              │                             │
              ▼◀────────────────────────────┘
    ┌──────────────────────────────┐  S207
    │ Display a first interface based on the display direction │
    └──────────────────────────────┘
```

FIG. 6

Determine, based
on a depth image, whether
an IR image is a face
image — S2030

Yes

Obtain key points in the IR image — S2031

Determine a first angle corresponding to the IR image based on the key points — S2032

Determine a second display direction based on the first angle — S2033

FIG. 7

210

220

FIG. 8

● Key point

1

2

3

4

5

FIG. 9

EP 4 600 783 A1

FIG. 10

32

1

125°    90°    55°

2                                    0

145°                          35°

180°                          0°

215°                          325°

235°   270°   305°    3

FIG. 11

Obtain first data and a first brightness in response to a first operation — S301

Capture a first image by using a TOF camera if the first brightness is less than a preset threshold — S302

S303

Determine whether a second display direction can be obtained based on the first image

No → Obtain a second image and second data — S305

S306

Determine a fifth display direction based on the second data if a fourth display direction is not obtained based on the second image

S307

Display a second interface based on the fifth display direction

Yes

Set the second display direction to a first display direction, and display a first interface based on the first display direction — S304

FIG. 12

If a sixth display direction is not obtained based on a correspondence between second data and a display direction, a fifth display direction is the same as a first display direction — S3061

If a sixth display direction is obtained based on a correspondence between second data and a display direction, determine whether the sixth display direction is the same as a first display direction — S3062

If the sixth display direction is the same as the first display direction, a fifth display direction is the same as the first display direction — S3063

Turn on a TOF camera if the sixth display direction is different from the first display direction — S3064

Display a second interface based on the fifth display direction — S307

Capture a third image by using the TOF camera — S3065

Determine a seventh display direction based on the third image — S3066

Display a third interface based on the seventh display direction — S3067

FIG. 13

Obtain first data and a first brightness in response to a first operation — S401

Determine whether the first brightness is less than a preset threshold — S402
No / Yes

Capture a first image by using a TOF camera — S403

Determine whether a second display direction is obtained based on the first image — S404
Obtain key points in an IR image — S4041
Determine a first angle corresponding to the IR image based on the key points — S4042
Determine a second display direction based on the first angle — S4043

No →

Obtain a second image and second data — S406

If a sixth display direction is not obtained, a fifth display direction is the same as the first display direction — S4071

If a sixth display direction is obtained, determine whether the sixth display direction is the same as the first display direction — S4072

S407: Determine a fifth display direction based on the second data if a fourth display direction is not obtained based on the second image

If the sixth display direction is the same as the first display direction, the fifth display direction is the same as the first display direction — S4073

Turn on the TOF camera if the sixth display direction is different from the first display direction — S4074

Capture a third image by using the TOF camera — S4075

Determine a seventh display direction based on the third image — S4076

Display a third interface based on the seventh display direction — S4077

Yes

Set the second display direction to a first display direction — S405

Obtain a fourth image — S409

Determine a first display direction based on the fourth image — S410

Display a first interface based on the first display direction — S411

Display a second interface based on the fifth display direction — S408

FIG. 14

36

Display apparatus 600

Obtaining unit 610

Processing unit 620

FIG. 15

700

701

702

Processor

Instruction

703

Memory

Program

704

Communication
unit

705

FIG. 16

## INTERNATIONAL SEARCH REPORT

| International application No. |
| --- |
| **PCT/CN2023/136224** |

| A. | CLASSIFICATION OF SUBJECT MATTER |
| --- | --- |

G06F 3/01(2006.01)i

According to International Patent Classification (IPC) or to both national classification and IPC

| B. | FIELDS SEARCHED |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNTXT, ENTXTC, CJFD: 荣耀终端, 张成, 屏幕, 显示, 画面, 旋转, 方向, 横屏, 竖屏, 人脸, 面部, 侧躺, 侧卧 , 躺, 深度, 识别, 夜 , 晚, 黑, 暗, 弱光 , 逆光, 阳光 , 光线, 亮度, 环境光遮蔽, AO , TOF , screen, rotation, face, indent+, recognition, lie, dark, backlight+, direction

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| X | US 2013234927 A1 (SAMSUNG ELECTRONICS CO., LTD.) 12 September 2013 (2013-09-12) <br> description, paragraphs [0002]-[0110], and figures 1-8 | 1-4, 10-14 |
| A | CN 101989126 A (SHENZHEN FUTAIHONG PRECISION INDUSTRY CO., LTD. et al.) 23 March 2011 (2011-03-23) <br> entire document | 1-14 |
| A | CN 103092344 A (SHENZHEN GIONEE COMMUNICATION EQUIPMENT CO., LTD.) 08 May 2013 (2013-05-08) <br> entire document | 1-14 |
| A | CN 112527094 A (HUAWEI TECHNOLOGIES CO., LTD.) 19 March 2021 (2021-03-19) <br> entire document | 1-14 |
| A | CN 114638925 A (HUAWEI TECHNOLOGIES CO., LTD. et al.) 17 June 2022 (2022-06-17) <br> entire document | 1-14 |
| A | US 2017287376 A1 (GOOGLE INC.) 05 October 2017 (2017-10-05) <br> entire document | 1-14 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 February 2024** | **04 March 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/136224** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2022368793 A1 (CITRIX SYSTEMS, INC.) 17 November 2022 (2022-11-17)<br>entire document | 1-14 |
| A | WO 2017018564 A1 (LG ELECTRONICS, INC.) 02 February 2017 (2017-02-02)<br>entire document | 1-14 |

Form PCT/ISA/210 (second sheet) (July 2022)

**INTERNATIONAL SEARCH REPORT**
Information on patent family members

International application No.

**PCT/CN2023/136224**

| Patent document cited in search report | | | Publication date (day/month/year) | Patent family member(s) | | | Publication date (day/month/year) |
|---|---|---|---|---|---|---|---|
| US | 2013234927 | A1 | 12 September 2013 | KR | 20130102848 | A | 23 September 2013 |
| | | | | KR | 101371547 | B1 | 07 March 2014 |
| | | | | US | 9671861 | B2 | 06 June 2017 |
| | | | | EP | 2637079 | A1 | 11 September 2013 |
| CN | 101989126 | A | 23 March 2011 | US | 2011032220 | A1 | 10 February 2011 |
| | | | | US | 8379059 | B2 | 19 February 2013 |
| CN | 103092344 | A | 08 May 2013 | WO | 2014107982 | A1 | 17 July 2014 |
| | | | | US | 2015042556 | A1 | 12 February 2015 |
| | | | | US | 9373156 | B2 | 21 June 2016 |
| CN | 112527094 | A | 19 March 2021 | | None | | |
| CN | 114638925 | A | 17 June 2022 | | None | | |
| US | 2017287376 | A1 | 05 October 2017 | US | 9704220 | B1 | 11 July 2017 |
| | | | | US | 2022237743 | A1 | 28 July 2022 |
| | | | | US | 2019005621 | A1 | 03 January 2019 |
| | | | | US | 10540753 | B2 | 21 January 2020 |
| | | | | US | 2020151853 | A1 | 14 May 2020 |
| | | | | US | 11308583 | B2 | 19 April 2022 |
| | | | | US | 10013738 | B2 | 03 July 2018 |
| US | 2022368793 | A1 | 17 November 2022 | WO | 2022236784 | A1 | 17 November 2022 |
| WO | 2017018564 | A1 | 02 February 2017 | KR | 101677658 | B1 | 18 November 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310481419